# EUROPEAN PATENT APPLICATION

(11) **EP 4 560 449 A1**
(43) Date of publication of application: **28.05.2025**
(21) Application number: 23918241.3
(22) Date of filing: 22.12.2023
(51) Int. Cl.: G06F 3/0483, G06F 3/04842, G06F 3/0486

(54) **DOCUMENT DISPLAY CONTROL METHOD AND APPARATUS, ELECTRONIC DEVICE, STORAGE MEDIUM, AND PROGRAM PRODUCT**

(30) Priority: 29.01.2023 CN 202310127878
(71) Applicant: Tencent Technology (Shenzhen) Company Limited, Shenzhen, Guangdong 518057 (CN)
(72) Inventor: LI, Sen, Shenzhen, Guangdong 518057 (CN); LIANG, Li, Shenzhen, Guangdong 518057 (CN); QIU, Kaijie, Shenzhen, Guangdong 518057 (CN); XU, Haihao, Shenzhen, Guangdong 518057 (CN)
(74) Representative: EP&C
(86) International application number: PCT/CN2023/140811
(87) International publication number: WO 2024/156241

(57) **Abstract**

The present application relates to the technical field of Internet, and in particular to a document display control method and apparatus, an electronic device, a storage medium, and a program product. The method comprises: displaying one or more content blocks of a target document in a first page mode in a document area in a document processing interface; in response to a mode switching operation on the document processing interface, switching the document processing interface from the first page mode to a second page mode, and displaying the one or more content blocks in the second page mode. The first page mode is used for presenting the one or more content blocks of the target document according to a first preset order. The second page mode is used for presenting the one or more content blocks of the target document on the basis of one or more graphics. Each graphic comprises a content block presented on the basis of a corresponding second preset order.

## Description

### RELATED APPLICATION

This application claims priority to Chinese Patent Application No. 202310127878.0, filed on January 29, 2023 and entitled "DOCUMENT DISPLAY CONTROL METHOD AND APPARATUS, ELECTRONIC DEVICE, AND STORAGE MEDIUM.

### FIELD OF THE TECHNOLOGY

The present disclosure relates to the field of internet technologies, and in particular, to a document display control method and apparatus, an electronic device, a storage medium, and a program product.

### BACKGROUND OF THE PRESENT DISCLOSURE

With the progress of science and technology research, many services are transferred from offline to online. In a process of online services, a smart document is usually involved. The smart document may be simultaneously and collaboratively edited or browsed by a plurality of people, for example, a word document, a table, or a slide. Changes generated by multi-person/multiuser collaborative operations may be synchronized with other participants in real time, and no operation conflict occurs.

Users' cognition and the habit for using a user for text, a table, and a graph are mature, and both viewing a document and editing a document are often based on the "text". To express meaningful content, currently, data is usually rendered in an ordered form such as a document, a paragraph, text, a section, a page, or a bar.

### SUMMARY

All embodiments of the present disclosure provide a document display control method and apparatus, an electronic device, a storage medium, and a program product.

A document display control method provided in all embodiments of the present disclosure includes:
displaying, in a document region of a document processing interface, one or more content blocks of an input document in a first preset order according to a first page mode; and
in response to a mode switching operation on the document processing interface, switching the document processing interface from the first page mode to a second page mode, and displaying the one or more content blocks of the input document inside one or more shape objects according to the second page mode, each of the one or more shape objects including at least one content block, and the at least one content block in each shape object being presented in a corresponding second preset order.

A document display control apparatus provided in all embodiments of the present disclosure includes:
a first display unit, configured to display, in a document region of a document processing interface, one or more content blocks of an input document in a first preset order according to a first page mode; and
a second display unit, configured to in response to a mode switching operation on the document processing interface, switch the document processing interface from a first page mode to a second page mode, and display the one or more content blocks of the input document inside one or more shape objects according to the second page mode, each of the one or more shape objects including at least one content block, and the at least one content block in each shape object being presented in a corresponding second preset order.

All embodiments of the present disclosure provide an electronic device, including a processor and a memory, the memory having a computer program stored therein, and the computer program, when executed by the processor, causing the processor to perform the operations of the foregoing document display control method.

All embodiments of the present disclosure provide a computer-readable storage medium, including a computer program, and when the computer program is run on an electronic device, the computer program being configured to cause the electronic device to perform the operations of the foregoing document display control method.

All embodiments of the present disclosure provide a computer program product, the computer program product including a computer program, the computer program being stored in a computer-readable storage medium, and when a processor of an electronic device reads the computer program from the computer-readable storage medium, the processor executing the computer program, to cause the electronic device to perform the operations of the foregoing document display control method.

### BRIEF DESCRIPTION OF THE DRAWINGS

The accompanying drawings herein are used for providing a further understanding of the present disclosure and constitute a part of the present disclosure. Example embodiments of the present disclosure and the descriptions thereof are intended to explain the present disclosure, and do not constitute any limitation on the present disclosure. In the accompanying drawings:
FIG. 1 is a schematic diagram of an example of an application scenario according to all embodiments of the present disclosure.
FIG. 2 is a schematic flowchart of a document display control method according to all embodiments of the present disclosure.
FIG. 3A is a schematic diagram of a mode menu bar according to all embodiments of the present disclosure.
FIG. 3B is a schematic diagram of another mode menu bar according to all embodiments of the present disclosure.
FIG. 3C is a schematic diagram of an access link according to all embodiments of the present disclosure.
FIG. 4 shows an example of a correspondence between a data structure and a view in a streaming document mode according to all embodiments of the present disclosure.
FIG. 5 is a schematic diagram of a document processing interface in a streaming document mode according to all embodiments of the present disclosure.
FIG. 6 shows an example of a correspondence between a data structure and a view in a borderless canvas mode according to all embodiments of the present disclosure.
FIG. 7 is a schematic diagram of a document processing interface in a borderless canvas mode according to all embodiments of the present disclosure.
FIG. 8 is a schematic diagram of another document processing interface in a borderless canvas mode according to all embodiments of the present disclosure.
FIG. 9A is a schematic diagram of a document processing interface when a borderless canvas mode is switched to a streaming document mode according to all embodiments of the present disclosure.
FIG. 9B is a schematic diagram of another document processing interface when a borderless canvas mode is switched to a streaming document mode according to all embodiments of the present disclosure.
FIG. 9C is a schematic diagram of still another document processing interface when a borderless canvas mode is switched to a streaming document mode according to all embodiments of the present disclosure.
FIG. 10A shows an example of a document processing interface in a streaming document mode according to all embodiments of the present disclosure.
FIG. 10B is a schematic diagram of a content menu bar according to all embodiments of the present disclosure.
FIG. 11A is a schematic diagram of a highlighted block according to all embodiments of the present disclosure.
FIG. 11B is a schematic diagram of a table according to all embodiments of the present disclosure.
FIG. 11C is a schematic diagram of a display setting bar in a borderless canvas mode according to all embodiments of the present disclosure.
FIG. 12A is a schematic diagram of a display setting bar in a streaming document mode according to all embodiments of the present disclosure.
FIG. 12B is a schematic diagram of a display setting bar in another streaming document mode according to all embodiments of the present disclosure.
FIG. 13A shows a related example of a layout template according to all embodiments of the present disclosure.
FIG. 13B shows a related example of another layout template according to all embodiments of the present disclosure.
FIG. 14 is a schematic diagram of a page mode switching procedure and a UI change according to all embodiments of the present disclosure.
FIG. 15 is a flowchart of implementing a document display control method according to all embodiments of the present disclosure.
FIG. 16 is an interaction time sequence diagram of a document display control method according to all embodiments of the present disclosure.
FIG. 17 is a schematic diagram of a composition structure of a document display control apparatus according to all embodiments of the present disclosure.
FIG. 18 is a schematic diagram of a composition structure of another document display control apparatus according to all embodiments of the present disclosure.
FIG. 19 is a schematic diagram of a composition structure of hardware of an electronic device to which all embodiments of the present disclosure is applied.
FIG. 20 is a schematic diagram of a composition structure of hardware of another electronic device to which all embodiments of the present disclosure is applied.

### DESCRIPTION OF EMBODIMENTS

To make objectives, technical solutions, and advantages of all embodiments of the present disclosure clearer, the following clearly and completely describes the technical solutions of the present disclosure with reference to the accompanying drawings in all embodiments of the present disclosure. It is clear that the described embodiments are some rather than all of all embodiments of the technical solutions of the present disclosure. All other embodiments obtained by a person of ordinary skill in the art based on all embodiments recorded in the document of the present disclosure without creative efforts shall fall within the protection scope of the technical solutions of the present disclosure.

The following describes some concepts involved in all embodiments of the present disclosure.

A smart document, which may also be referred to as an online document, belongs to a light-edited document category, and may support online creation, online editing, and sharing simultaneously performed by a plurality of people, to implement an online collaboration function of the document. In all embodiments of the present disclosure, a user may drag a component in a LEGO manner on a canvas, to create an application-type document with high degree of integration and no category difference.

A content block is a basic composition unit of a smart document. In other words, content of the smart document is formed by using a "block" as a basic unit. Content of each block may include paragraph text, a picture, form data (for example, an intelligent table and an advanced chart), media and a file, and third-party content (such as a third-party application/mini program (a sub-application that can be used in an application without being downloaded and installed)), and the like. For example, one content block may include one or more paragraphs of text, one or more pictures, one or more pieces of third-party content, or the like.

A document processing interface is a user-oriented interface configured to display a smart document associated with a user currently logged in to a client. In all embodiments of the present disclosure, the document processing interface displays different page modes, and supports switching between different page modes.

The page mode is a display form of a page. The display form includes a type of a region, a size of the region, a display form of content in the region, and the like included in the document processing interface. The present disclosure provides at least two different page modes, for example, a streaming document mode and a borderless canvas mode. The document processing interface may include a plurality of regions in the streaming document mode, for example, including a directory region and a document region, and the document processing interface may include only the document region and does not include the directory region in the borderless canvas mode. Sizes of document regions are different in the two modes. In addition, in the streaming document mode, content blocks in the document region are presented in an ordered form. In the page mode, viewing/editing document content from top to bottom is supported. In the borderless canvas mode, a shape object is used as a carrier of the content block. The shape objects may not be in order, but content blocks in the shape objects are still in order. There is no direction limitation on viewing/editing the document content in the page mode.

A data structure refers to a representation form of document data. In all embodiments of the present disclosure, data structures corresponding to different page modes are also different. In the streaming document mode, a data structure used is a content field representing the document content. The content field is in a format of an array type, and may store order information of content blocks in an input document, so that the content blocks are stored in an ordered manner. In the borderless canvas mode, the data structure used is a shape field representing shape object content. The shapes field is in a format of a key-value pair, and may store layer information and coordinate information of each shape object in the canvas.

The order information refers to an order in which the content blocks are arranged from top to bottom in the input document.

Layer information and coordinate information: The coordinate information refers to a position of the shape object on the canvas, and may be understood as an x-axis coordinate and a y-axis coordinate. The layer information may be understood as a z-axis coordinate, and is configured for determining a coverage order when the shape objects overlap with each other, that is, representing upper-lower-layer order information between the shape objects when the shape objects overlap with each other, and also determining an order between content blocks in a same shape object. Whether overlapping refers to partial overlapping or complete overlapping is not limited in this specification.

An editing component is to componentize an existing editing capability or a newly developed editing capability of the smart document, and construct data into blocks for a user to build a scenario solution.

The following briefly introduces design ideas of all embodiments of the present disclosure.

With continuous progress of science and technology, electronic technologies are also developed rapidly. Many terminal devices, for example, a smartphone and a tablet computer, become necessities in people's daily life, so that a user can obtain required information through various clients, for example, a browser and instant messaging software.

With the development of document processing office software, the smart document is increasingly used in people's life, and a user may view and edit various documents, for example, a word document and a PDF document through related clients. Based on this, both cognition and a use habit of a user for text, a table, and a shape object are mature, and a manner of viewing a document and editing a document in a streaming manner from top to bottom has not been changed.

In recent years, new products emerge in the field of online collaborative editing, mainly including two categories: a cross-category canvas and a database spreadsheet. Revolutionized innovation is performed on the products based on an original doc and sheet respectively, and a previously existing cognitive barrier is broken. However, page modes of both viewing a document and editing a document are fixed, and there is no new breakthrough or attempt.

In addition, even if a web page version of a current smart document has a full-screen function, theoretically, the web page version is only a magnified version of a browser. In a full-screen state, an entire document is merely magnified and browsed. As a result, it is inconvenient for a user to operate the smart document, and document processing efficiency is not high.

In view of this, all embodiments of the present disclosure provide a document display control method and apparatus, an electronic device, and a storage medium. In the present disclosure, a user may switch between two page modes: the streaming document mode and the borderless canvas mode based on different scenario requirements, and content in a document is matched by using corresponding page mode transition logic. Specifically, in different page modes, in addition to different display sizes of document regions, display styles of the content blocks included in the input document are also different. In the streaming document mode, the content blocks of the input document may be presented in a specific order. In the borderless canvas mode, the content blocks are displayed in the shape objects, the shape objects may not be sequential in the document region, and the content blocks in each shape object are sequential. Different scenario requirements can be satisfied and a user with different requirements can be considered in the foregoing two different page modes, so that the smart document has a new breakthrough in an exploration direction of a document application form, to better serve a user editing scenario and improve processing efficiency of the smart document. Structured data constructed based on the content blocks may simultaneously support at least two page modes, so that the document content has a stronger expression capability and more dimensions. In addition, in the two page modes, data layers are homologous and synchronized, and rendering layers are independent of each other, that is, data and/or content in the content blocks may be simultaneously used in the two modes, and data structures configured for representing views in the two page modes are independent. When a user performs an operation on the input document in one page mode, update of the data layer in a background may be simultaneously used in the two page modes based on the operation of a user. In addition, a small amount of data of the rendering layer configured for rendering the view in the other page mode is updated, so that processing of the document data is more efficient. When the other page mode is switched to, because data of the data layer and the rendering layer is updated in real time based on the operation of the user, switching is faster, and rendering is more accurate. In addition, if page modes of the smart document are to be extended, the data structure of the rendering layer of the smart document may be modified, so that the data structure of the rendering layer has good extensibility.

The following describes the preferred embodiments of the present disclosure with reference to the accompanying drawings of the specification. The preferred embodiments described herein are merely intended to describe and explain the present disclosure, but are not intended to limit the present disclosure. In addition, all embodiments of the present disclosure and features in all embodiments may be mutually combined without conflict.

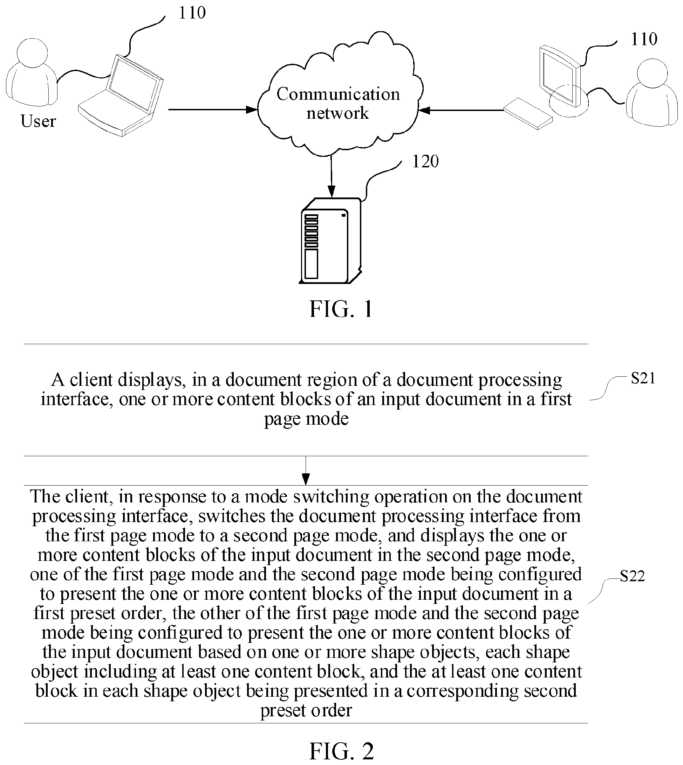

FIG. 1 is a schematic diagram of an application scenario according to all embodiments of the present disclosure. The application scenario diagram includes two terminal devices 110 and one server 120.

In all embodiments of the present disclosure, the terminal device 110 includes, but is not limited to, devices such as a mobile phone, a tablet computer, a notebook computer, a desktop computer, an e-book reader, a smart voice interaction device, a smart home appliance, a vehicle-mounted terminal, and the like. A client related to document processing may be installed on the terminal device. The client may be software (for example, a browser or document processing office software), or may be a web page, a mini-program, or the like. The server 120 is a background server corresponding to the software, the web page, the mini-program, or the like, or a server dedicated to performing document processing. This is not specifically limited in the present disclosure. The server 120 may be an independent physical server, or a server cluster or a distributed system including a plurality of physical servers, or may alternatively be a cloud server that provides a cloud service, a cloud database, cloud computing, a cloud function, cloud storage, a network service, cloud communication, a middleware service, a domain name service, a security service, a content delivery network (CDN), and a basic cloud computing service such as big data and an artificial intelligence platform.

The document display control method in all embodiments of the present disclosure may be performed by an electronic device. The electronic device may be the terminal device 110 or the server 120. For example, the method may be independently performed by the terminal device 110 or the server 120, or may be jointly performed by the terminal device 110 and the server 120. For example, when the method is jointly performed by the terminal device 110 and the server 120, for example, when a user views an input document through the office software (such as the client) installed on the terminal device 110, the terminal device 110 sends a display request for the input document to the server 120, and after receiving the display request, the server 120 feeds back data structures corresponding to content blocks of the input document to the terminal device 110, so that when determining to display the input document in a first page mode, the terminal device 110 presents the content blocks in a document region in a document processing interface of the office software based on a data structure corresponding to the first page mode, and presents, in response to a mode switching operation on the document processing interface when the document processing interface is switched from the first page mode to the second page mode, the content blocks based on a data structure corresponding to a second page mode.

Display sizes of document regions corresponding to the first page mode and the second page mode are different. One is a streaming document mode in which the content blocks of the input document are presented in a first preset order; and the other is a borderless canvas mode in which the content blocks of the input document are presented based on shape objects, each shape object includes at least one content block, and the content blocks inside each shape object are presented in a corresponding second preset order.

In all embodiments, the terminal device 110 may communicate with the server 120 through a communication network.

In all embodiments, the communication network is a wired network or a wireless network.

FIG. 1 is merely an example for description. Actually, the quantity of terminal devices and the quantity of servers are not limited, and are not specifically limited in all embodiments of the present disclosure.

In all embodiments of the present disclosure, when there are a plurality of servers, the plurality of servers may form a blockchain, and the servers are nodes on the blockchain. In the document display control method disclosed in all embodiments of the present disclosure, related document processing data, for example, the data structures corresponding to content blocks of the input document and operation information of a user, may be stored in the blockchain.

In addition, all embodiments of the present disclosure may be applied to various scenarios, including but not limited to scenarios of cloud technologies, artificial intelligence, intelligent transportation, assistance driving, and the like.

The document display control method provided in the exemplary implementations of the present disclosure is described below with reference to the accompanying drawings in combination with the foregoing described application scenarios. The foregoing application scenarios are merely shown for ease of understanding the spirit and principle of the present disclosure, and the implementations of the present disclosure are not limited in this aspect.

FIG. 2 is a flowchart of implementing a document display control method according to all embodiments of the present disclosure. For example, a client is used as an execution entity. A specific implementation procedure of the method is as follows.

Operation S21: The client displays, in a document region of a document processing interface, one or more content blocks of an input document in a first page mode. The first page mode may refer to a first display size of the document region.

The input document in all embodiments of the present disclosure may be a smart document, such as an online document, and specifically, an online document that can be collaboratively edited by a plurality of people; or may be another type of document. Details are not described herein again. The following mainly uses the online document as an example for description.

Operation S22: The client switches the document processing interface from the first page mode to a second page mode in response to a mode switching operation on the document processing interface, and displays the one or more content blocks of the input document in the second page mode. The second page mode may refer to a second display size of the document region. The second display size is different from the first display size. In other words, display sizes of document regions corresponding to the first page mode and the second page mode are different. One (such as the first page mode) of the first page mode and the second page mode is configured to present the one or more content blocks of the input document in a first preset order. The other (such as the second page mode) of the first page mode and the second page mode is configured to present the one or more content blocks of the input document based on one or more shape objects. Each of the one or more shape objects includes at least one content block, and the at least one content block in each shape object is presented in a corresponding second preset order.

In all embodiments of the present disclosure, the document region is, for example, a region dedicated to displaying document data. In different page modes, the display size of the document region is also different, which is convenient for a user to perform selection based on a requirement of the user. In all embodiments of the present disclosure, block-based structured data is innovatively used as a basic unit of the smart document, and a document is formed by the at least one content block. Content in each content block may include paragraph text, a picture, form data, media and a file, third-party content, and the like. Because each independent content block is meaningful and readable content, the content blocks can be freely organized based on service requirements, so that an ordered streaming document mode, a borderless canvas mode, and even a stereoscopic presentation mode can be implemented based on the content blocks. For the streaming document mode and the borderless canvas mode in all embodiments of the present disclosure, in the two page modes, data layers of the smart documents are homologous and synchronized.

In the foregoing descriptions, the content blocks in the streaming document mode are ordered. For example, the content blocks in the input document are presented in the document region from top to bottom in the first preset order. In the borderless canvas mode, the document region is not limited by a border, and display of the content blocks in the document region is implemented based on the shape objects. Each shape object includes the at least one content block, and the content blocks in each shape object may be grouped into one group. The at least one content block included in each shape object may be completely included in each shape object. An order between groups may be arbitrarily adjusted by a user according to a requirement of the user, and is not limited by a top-bottom direction or another direction (such as a left-right direction). The content blocks in the group are still arranged in a streaming manner. For example, the content blocks in each shape object are presented in the shape object from top to bottom in the corresponding second preset order. For the two page modes, rendering layers of the smart documents are independent.

Based on the foregoing manner, a user may switch the smart document from a display mode of a streaming content structure to a borderless canvas display mode, or switch from a borderless canvas display mode to a display mode of a streaming content structure by switching the page mode. In the present disclosure, an editing component of the smart document may be compatible with different page modes, that is, the document data may be compatible with different page structures, so that an expression capability of document content is stronger and dimensions are greater in quantity, and the document is presented in a more intuitive and contextualized manner. In addition, in the two page modes, the data layers are homologous and synchronized, and the rendering layers are independent of each other, that is, data and/or content in the content blocks may be simultaneously used in the two modes, and data structures configured for representing views in the two page modes are independent. When a user performs an operation on the input document in one page mode, update of the data layer in a background may be simultaneously used in the two page modes based on the operation of the user. In addition, a small amount of data of the rendering layer configured for rendering a view in the other page mode is updated. When the other page mode is switched to, because data of the data layer and the rendering layer is updated in real time based on the operation of the user, switching is faster, and rendering is more accurate. In addition, if page modes of the smart document are to be extended, the data structure of the rendering layer of the smart document may be modified, so that the data structure of the rendering layer has good extensibility. Switching between the page modes and display and editing of the documents in different page modes in the present disclosure are described in detail below.

In all embodiments of the present disclosure, a user may implement switching between the page modes through a related control in the document processing interface. Based on this, an implementation of operation S22 is shown in the following operation 221 and operation 222.

Operation 221: Present, in response to a trigger operation on a switch control in the document processing interface, a mode menu bar associated with the switch control, the mode menu bar including at least the first page mode and the second page mode.

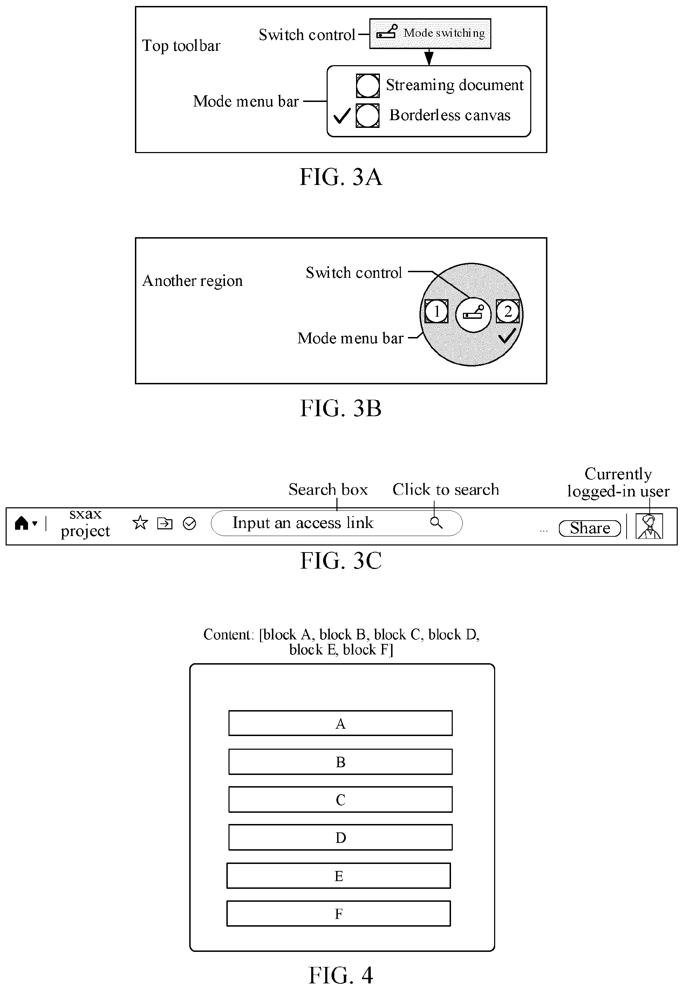

FIG. 3A is a schematic diagram of a mode menu bar according to all embodiments of the present disclosure. A "mode switch" button in FIG. 3A is a switch control according to all embodiments of the present disclosure, and is displayed in a top toolbar (the toolbar may alternatively be displayed at another position, and this is not specifically limited herein) of a document processing interface. After a user clicks (which may alternatively be another operation such as a double-click operation, and this is not specifically limited herein) the "mode switch" button, the mode menu bar may be presented. The mode menu bar provides at least two options: a first page mode and a second page mode. FIG. 3A shows two modes: a "streaming document" mode and a "borderless canvas" mode, for the user to switch between different page modes.

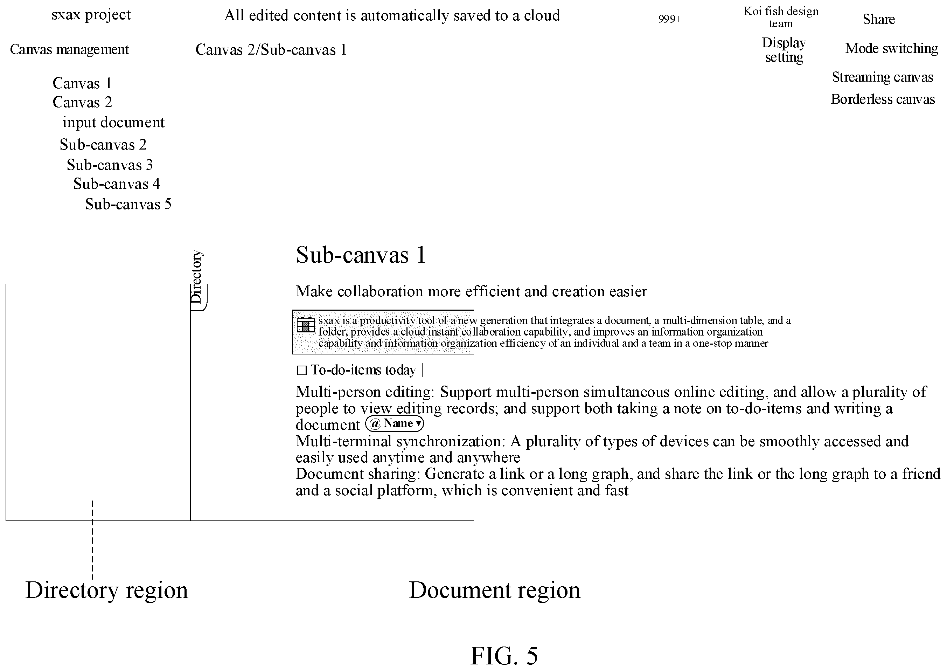

FIG. 3A is merely a simple example for description. Display manners of the switch control and the mode menu bar are not specifically limited in the present disclosure, and any display manner is applicable to all embodiments of the present disclosure. For example, in addition to being displayed in the top toolbar in the document processing interface shown in FIG. 3A, FIG. 5, and the like, the switch control or the mode menu bar may be further displayed in another region in the document processing interface, for example, in an editing region (such as the document region) of the document in a form of a floating window or a pop-up window.

FIG. 3B is a schematic diagram of another mode menu bar according to all embodiments of the present disclosure. FIG. 3B is a schematic diagram in which a floating ball (a form of a floating window) is used as an example. After a user clicks (which may alternatively be another operation such as a double-click operation, and this is not specifically limited herein) a switch control in the floating ball, the mode menu bar may be presented, as shown by a gray circular ring in FIG. 3B. The mode menu bar provides at least two options: a first page mode and a second page mode. For example, an option numbered 1 represents a streaming document mode, and an option numbered 2 represents a borderless canvas mode, for a user to switch between different page modes.

In addition, an activating manner of the mode menu bar is not specifically limited in the present disclosure, and any activating manner is applicable to all embodiments of the present disclosure. For example, the mode menu bar may be aroused through a gesture (for example, presentation of the mode menu bar is aroused through swiping down by one-finger), or mode switching may be performed through gesture triggering (for example, the page mode is switched through swiping down by two fingers). In this manner, a client may directly present the mode menu bar in response to a preset gesture trigger operation on a document processing interface without performing triggering through the switch control.

Any mode switching manner for the document processing interface is applicable to all embodiments of the present disclosure. Details are not described herein again.

Operation 222: Switch the document processing interface from the first page mode to the second page mode in response to the mode switching operation triggered by selecting the second page mode.

FIG. 3A is still used as an example. A user may trigger the mode switching operation by selecting another page mode different from a current page mode. As shown in FIG. 3A, the streaming document mode is a default mode, and a user switches the streaming document mode to the borderless canvas mode through selection.

When the user first opens the document processing interface, the current page mode may be the streaming document mode by default.

In addition, certain switches may alternatively be set. For example, when the switch is turned on, the borderless canvas mode may be switched to, and when the switch is turned off, the streaming document mode may be switched to. This is not specifically limited herein.

In the foregoing implementations, the user may switch, through one click, the input document from a display mode of a streaming content structure to a borderless canvas display mode, or switch, through one click, the input document from a borderless canvas display mode to a display mode of a streaming content structure through switching between page modes, and the operation is simple.

In all embodiments of the present disclosure, the user may further implement switching between page modes through an access link of the document. For example, different page modes correspond to access links of different types.

For example, in the streaming document mode and the borderless canvas mode, there are uniform resource locator (URL) addresses of different types. For example, the streaming document mode is "/aio/::pageid", and the borderless canvas mode is "/aio/::pageid/edgeless". In addition, different documents may also correspond to different page ids.

Based on this, another implementation of operation S22 is as follows:
switching the document processing interface from the first page mode to the second page mode in response to the mode switching operation triggered by inputting an access link of a type corresponding to the second page mode.

The foregoing descriptions are still used as an example. For example, if the current page mode is the streaming document mode, when the user wants to view the input document in the borderless canvas mode, an access link that is of a type "/aio/::pageid/edgeless" and that is for the input document may be inputted at a corresponding position.

FIG. 3C is a schematic diagram of an access link according to all embodiments of the present disclosure. For example, the user may enter the corresponding "/aio/::pageid/edgeless" in a search box in FIG. 3C based on the page id of the input document, and then click a search button for search.

In the foregoing implementation, the user can input the access link, to switch between different page modes, and the operation is also simple.

The document display control method in all embodiments of the present disclosure is mainly described below in a manner of the switch listed in FIG. 3A as an example. Certainly, other manners are also applicable to all embodiments of the present disclosure. Details are not described herein again.

In all embodiments of the present disclosure, different page modes correspond to different types of data structures, and the data structures of different types may simultaneously exist.

The streaming document mode and the borderless canvas mode are used as examples. The streaming document mode and the borderless canvas mode are implemented based on different data structures, and the two page modes are views in which the data layers are homologous and synchronized and the rendering layers are independent of each other.

Therefore, based on the foregoing manner, switching between the streaming document mode and the borderless canvas mode on the document processing interface can be supported without changing the data structure of the smart document.

For example, each content block of the input document has a unique identifier, and the unique identifier is the same under different data structures. A correspondence between the different data structures may be implemented based on unique identifiers of all content blocks.

Based on this, when determining to display the input document in the document processing interface in the streaming document mode, the client performs corresponding rendering in the document processing interface based on the data structure corresponding to the streaming document mode. When the borderless canvas mode is switched to, corresponding rendering is performed on the document processing interface based on the data structure corresponding to the borderless canvas mode.

Processes of performing rendering based on the corresponding data structures in the streaming document mode and the borderless canvas mode are described in detail below.

In the streaming document mode, a corresponding data structure (for example, referred to as a first data structure of the input document) includes a first field representing document content, for example, denoted as a content field. The first field is of an array type, and is configured to store order information of the content blocks in the input document. Based on this, orderly storage of the content blocks can be implemented.

Based on this, in operation S21 or operation S22, an implementation of displaying the one or more content blocks of the input document is as follows:
rendering the one or more content blocks of the input document to the document region from top to bottom in the first preset order corresponding to the order information stored in the first field.

If the input document includes six content blocks, an order of the six content blocks is A->B->C->D->E->F. In this case, when a view including the six content blocks is rendered, corresponding content blocks are rendered to the view from top to bottom based on the foregoing stored (recorded) order information.

For example, a representation manner of the content field is as follows:
content: [block A, block B, block C, block D, block E, block F].

In all embodiments, the first preset order is, for example, an order of content of the content blocks. A plurality of content blocks may be sequentially presented by presenting only one content block (for example, a content block currently being processed) each time in the order of the content of the plurality of content blocks, or more than one content block is presented each time, but one of the content blocks is highlighted, indicating a currently processed content block.

FIG. 4 shows an example of a correspondence between a data structure and a view in a streaming document mode according to all embodiments of the present disclosure. For example, in the streaming document mode, a rendering capability may be supported based on a React+Mobx technical framework, each content block is rendered to the document region in the document processing interface from top to bottom or from left to right based on the order information recorded in the content field, and some basic operation capabilities of the document are provided.

FIG. 4 is merely a simple example of the content blocks in the input document.

In the foregoing implementation, the content block is used as a basic unit, and the order information of the content blocks is recorded through simple content. In the streaming document mode, an order of the document content included in the content blocks in the input document can be simply and quickly determined based on the content field. Based on this, the document content included in the content blocks may be quickly and accurately rendered to the view.

In the streaming document mode, the document processing interface may further include a directory region. The directory region is configured to display directory information of the input document.

The directory information may include a relationship between a document and a sub-document and a relationship between content such as a title and a paragraph in the document.

FIG. 5 is a schematic diagram of a document processing interface in a streaming document mode according to all embodiments of the present disclosure. In FIG. 5, the directory information displayed in the directory region includes a relationship between a canvas (for example, the document) and a sub-canvas (for example, the sub-document). If there are a plurality of canvases: a canvas 1 and a canvas 2, the canvas 2 includes a plurality of sub-canvases: a sub-canvas 1 (such as the input document), a sub-canvas 2, a sub-canvas 3, a sub-canvas 4, and a sub-canvas 5. In addition, the directory information may further include a title in the document or the sub-document, a relationship between paragraphs, and the like. Details are not described herein again.

In addition, the content blocks displayed in the document region in FIG. 5 are presented from top to bottom. In the streaming document mode, presentation of the content blocks is directly readable content, for example, "make collaboration more efficient..." in FIG. 5, and there is no need to display shape objects outside the content blocks as in the borderless canvas mode.

In the borderless canvas mode, the document processing interface may include only the document region. Therefore, the document region is borderless and displayed in the document processing interface in full screen.

In the borderless canvas mode, a corresponding data structure (for example, referred to as a second data structure of the input document) includes a second field representing shape object content, for example, defined as a shapes field. The second field is a key-value pair, and is configured to store layer information and coordinate information that are of each shape object on the canvas and that are in the input document.

The layer information is configured for representing the order information of the content blocks in the shape objects. In addition, when the shape objects overlap with each other, the layer information is further configured for representing z-axis information between the shape objects. The z-axis information indicates an upper-lower-layer relationship between the overlapping shape objects when the shape objects overlap with each other, and an upper-layer shape object covers a lower-layer shape object.

Based on this, in operation S21 or operation S22, displaying the one or more content blocks of the input document may be as follows:
rendering each shape object to the document region based on the layer information and the coordinate information of each shape object in the second field, the at least one content block inside each shape object being presented in the corresponding second preset order.

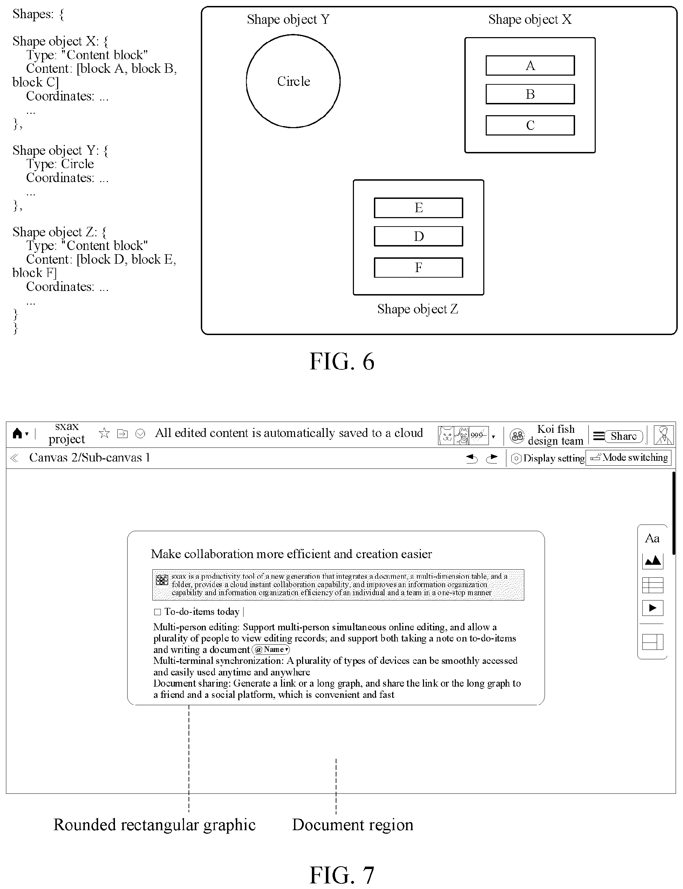

FIG. 6 shows an example of a correspondence between a data structure and a view in a borderless canvas mode according to all embodiments of the present disclosure. In FIG. 6, the content block A, the content block B, and the content block C are located in a shape object X, and the corresponding second preset order from top to bottom is: the content block A, the content block B, and the content block C; and the content block D, the content block E, and the content block F are located in a shape object Z, and the corresponding second preset order from top to bottom is: the content block D, the content block E, and the content block F. In addition, the input document further includes another shape object Y, and the shape object may be used as an independent content block.

Specifically, a representation manner of the shapes field is as follows:

```
             Shapes: {
             Shape object X: {
                 Type: "Content block"
                 Content: [block A, block B, block C]
                 Coordinates: ...
                 ...
             },
             Shape object Y: {
                 Type: Circle
                 Coordinates: ...
                 ...
             },
             Shape object Z: {
                 Type: "Content block"
                 Content: [block D, block E, block F]
                 Coordinates: ...
                 ...
             }
             }
```

The representation manner of the shapes field listed above is merely a simple example for description. This is not specifically limited herein.

In all embodiments, the second preset order is, for example, an order of content of the content blocks in the shape objects. The plurality of content blocks may be sequentially presented by presenting only one content block (for example, the content block currently being processed) each time in the order of the content of the plurality of content blocks in the shape objects, or more than one content block is presented each time, but one of the content blocks is highlighted, indicating the currently processed content block.

In the borderless canvas mode, the smart document draws each shape object in the shapes field on the canvas based on recorded coordinates and levels.

FIG. 7 is a schematic diagram of a document processing interface in a borderless canvas mode according to all embodiments of the present disclosure. The document processing interface shown in FIG. 7 corresponds to the document processing interface shown in FIG. 5, and represents a corresponding schematic diagram in which the document processing interface (the streaming document mode) shown in FIG. 5 is switched to the document processing interface (the borderless canvas mode) shown in FIG. 7.

In all embodiments of the present disclosure, when a user first switches the input document from the streaming document mode to the borderless canvas mode, all content blocks of the input document are in a default shape object (such as a rounded rectangle shown in FIG. 7). Each shape object may be understood as a group.

In the borderless canvas mode, an open-source framework TlDraw may be introduced, and canvas and shape objects rendering is performed by using scalable vector graphics (svg) as a medium.

In the foregoing implementation, the content block is used as the basic unit, and the layer information, the coordinate information, and the like are recorded through simple shapes. In the borderless canvas mode, positions of the shape objects in the canvas and an order between the content blocks in the shape objects can be simply and quickly determined based on the shapes field, and then the document content included in the shape object and the content blocks can be quickly and accurately rendered to the view based on this.

Further, considering that in the borderless canvas mode in all embodiments of the present disclosure, each shape object may be disordered, which is different from a top-to-bottom arrangement manner in the streaming document mode, based on this, a user may further adjust display of the document in the borderless canvas mode by dragging the shape object, the content block, or the like.

An exemplary implementation is: updating display of corresponding content in the document region in response to a drag operation on the at least one content block or the shape object displayed in the borderless canvas mode, and updating the first data structure in the streaming document mode and the second data structure in the borderless canvas mode based on a result of the drag operation.

The update of shape object display includes but is not limited to: zooming the shape object based on dragging, moving the shape object based on dragging, adjusting a size of an original shape object based on changes in the content blocks in the shape object before and after dragging, and considering, based on positions of the content blocks before and after dragging, whether to generate a new shape object, and the like.

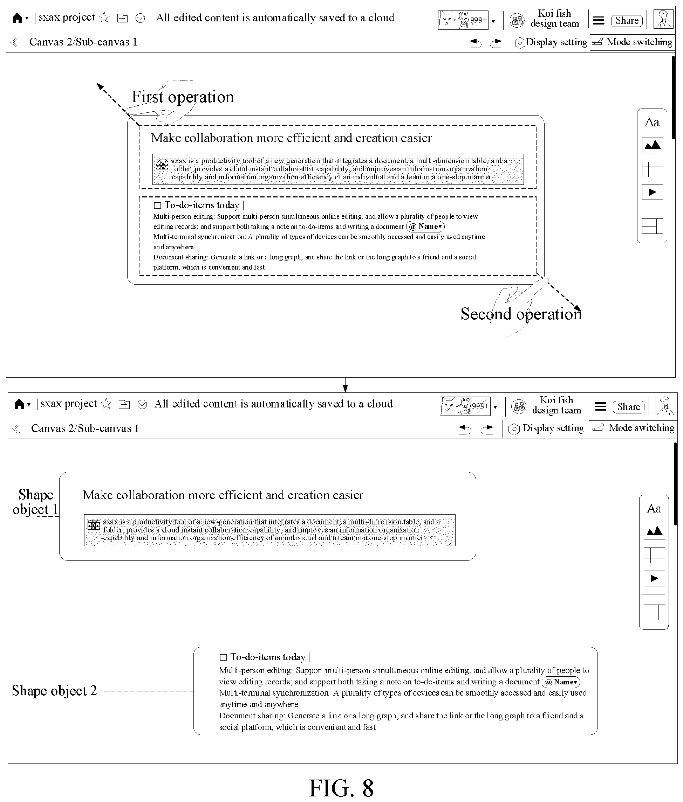

FIG. 8 is a schematic diagram of another document processing interface in a borderless canvas mode according to all embodiments of the present disclosure. FIG. 8 indicates that based on FIG. 7, a user drags a part of paragraphs in a rounded rectangle to another place in the canvas, and generates a new shape object therefor, and the new shape object may be defined as a shape object 1 and is used as a group (operation 1). In addition, a remaining part of paragraphs in the rounded rectangle may be used as another group, the part of paragraphs is dragged to another place in the canvas, and a shape object corresponding to the part of paragraphs is updated, so that this may be defined as a shape object 2 (operation 2), to form the schematic diagram shown in FIG. 8. In FIG. 8, an upper figure is a schematic diagram of a document processing interface before dragging, and a lower figure is a schematic diagram of a document processing interface after dragging.

An inner part of each shape object may be in a local streaming layout. In other words, the content blocks inside each shape object are presented in the corresponding second preset order.

Assuming that "make collaboration more efficient and creation easier" in the shape object 1 is one content block, and "sxax is a productivity tool of a new generation, ..., organization capability and efficiency" is used as another content block, in the shape object 1, the two content blocks are in the local streaming layout. Similarly, for example, when "to-do-items today" in the shape object 2 is used as a content block and "multi-person editing..., multi-end synchronization..., document sharing..." is used as a content block, the two content blocks are also in the local streaming layout.

In the borderless canvas mode in all embodiments of the present disclosure, normal creation and movement of the shape objects and the content blocks are supported, and dragging the shape objects back and forth between different groups is further supported.

In the foregoing implementation, a user may automatically modify field information corresponding to the first data structure and the second data structure in the streaming document mode and the borderless canvas mode by moving, adding, and deleting the shape objects, the content blocks, and the like, and synchronize the field information to a server, to implement editing of the document.

In the streaming document mode in all embodiments of the present disclosure, presentation of the content blocks is determined based on the order information. In the borderless canvas mode, the layer information and the coordinate information of the shape objects may be further considered.

For example, in addition to storing the order information of the content blocks, data of a page further stores shape object information associated with the data of the page, including the layer information and the coordinate information, and each shape object is associated with the plurality of content blocks.

When the page is in the streaming document mode, the shape object information is not used, and only the content block information is configured for arrangement and rendering. When the page is in the borderless canvas mode, the shape object information is used to draw various elements on the canvas based on a size, coordinates, a direction, and the like stored in the shape object information. In addition, the content blocks associated with the shape objects are arranged and rendered in a streaming manner inside the corresponding shape objects.

In summary, in the present disclosure, the order information of the content blocks needs to be considered for displaying the content blocks in the streaming document mode, and the order of the content blocks varies with a change of the content blocks inside the shape objects in the borderless canvas mode, dragging between different shape objects, and a change of z axises of the different shape objects.

Based on this, when the displayed shape objects and/or content blocks are dragged in the borderless canvas mode, the first data structure in the streaming document mode and the second data structure in the borderless canvas mode may be updated based on a result of dragging.

An exemplary implementation is as follows.

First, layer information and coordinate information of a shape object related to the drag operation in the borderless canvas mode are updated based on the result of the drag operation.

If only the shape object is dragged, the coordinates of the shape object need to be updated. If shape object overlapping occurs through dragging, layer information of the overlapping shape objects needs to be further updated.

FIG. 6 is used as an example. If a shape object X overlaps with a shape object z, z coordinates of the shape object X are larger, and z coordinates of the shape object z are smaller, in addition to updating coordinate information of the two shape objects, corresponding layer information needs to be further updated. In the present disclosure, a case where the larger z coordinates indicate a corresponding higher level may be set. Certainly, a case that smaller z coordinates indicate a corresponding lower level may be set. This is merely a simple example herein, and this is not specifically limited herein.

For another example, when the order of the content blocks inside the shape objects is also adjusted, the corresponding second preset order needs to be further updated.

FIG. 6 is still used as an example. For example, when the content block A in the shape object X is adjusted between the content block B and the content block C, the second preset order corresponding to the content blocks in the shape object X is also changed, and is updated to [block B, block A, block C].

For another example, when the one or more content blocks in the shape objects are dragged to another shape object or a newly generated shape object, information related to the content blocks included in the shape objects needs to be further adjusted. Details are not described herein again.

FIG. 6 is still used as an example. For example, when the content block A in the shape object X is dragged below the content block F in the shape object Z, the second preset order corresponding to the content blocks in the shape object X and the second preset order corresponding to the content blocks in the shape object Z are respectively changed. For example, the second preset order of the content blocks in the shape object X is updated to [block B, block C], and the second preset order of the content blocks in the shape object Z is updated to [block E, block D, block F, block A].

Further, the order information of the content blocks corresponding to the related shape objects in the streaming document mode is updated based on updated coordinate information of the related shape objects, and the order information of the content blocks in the related shape objects in the streaming document mode is updated based on updated layer information of the related shape objects.

In the present disclosure, only the order information of the content blocks may need to be considered in the streaming document mode. The information varies with the change of the content blocks inside the shape objects in the borderless canvas mode, dragging between the different shape objects, and the change of the z axises of the different shape objects.

In summary, the order information between the content blocks (groups) of the shape objects in the streaming document mode may be updated based on coordinate information (corresponding to a change between the different shape objects) in updated shapes.

For example, if a position of the shape object X and a position of the shape object Z are swapped, an order between groups also needs be adjusted to be a case that a group [block A, block B, block C] corresponding to the shape object X is located below [block D, block E, block F]. When the order of the content blocks inside the shape objects (that is, inside the groups) changes, an order of group content also needs to be adjusted. For example, if the order of the content blocks inside the shape object X is changed into [block B, block A, block C], it is finally determined that the content blocks in the shape object X and the shape object Z need to be updated to [block B, block A, block C, block D, block E, block F] in the streaming document mode.

In addition, assuming that the shape object Y includes a content block G, because the shape object Y is located above the shape object X (which may be determined based on a center of the shape object, and a shape object with a center closer to the top is closer to the top), it may be determined that content in the streaming document mode needs to be [block G, block B, block A, block C, block D, block E, block F].

Assuming that y coordinate of the center of the shape object Y is the same with that of the center of the shape object X, x coordinates of the shape objects X and Y may be further analyzed. For example, smaller x indicates that a corresponding content block is closer to the top. For example, the block G is located above [block B, block A, block C].

The update manners listed above are merely simple examples. Actually, other similar update manners are also applicable. This is not specifically limited herein.

In all embodiments of the present disclosure, when the shape objects overlap with each other, the layer information may further represent upper-lower-layer order information between the shape objects that overlap with each other. Based on this, the order information of the content blocks corresponding to the shape objects in the streaming document mode may be further updated based on the updated coordinate information and the upper-lower-layer order information.

For two shape objects that overlap with each other, for example, when the shape object X overlaps with the shape object Y, the z coordinates of the shape object X are larger, and the z coordinates of the shape object z are smaller, the smaller z coordinates indicate that the content block is closer to the top, for example, [block A, block B, block C] are located below [block D, block E, block F].

In the present disclosure, when a user adjusts the shape objects on the z axis in the borderless canvas mode, the order of the content blocks in the group is also synchronously adjusted.

The several cases listed above are merely simple examples, and any case is applicable to all embodiments of the present disclosure, and are not listed one by one herein.

In all embodiments of the present disclosure, when the borderless canvas mode is switched to the streaming document mode, display of the one or more content blocks of the input document may be updated in the document region based on an updated first data structure in the streaming document mode.

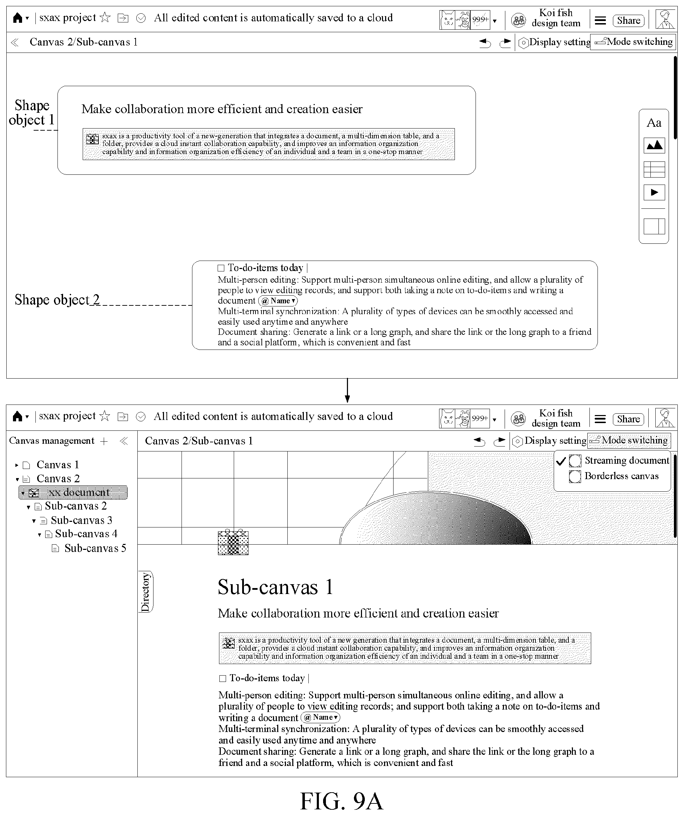

FIG. 9A is a schematic diagram of a document processing interface when a borderless canvas mode is switched to a streaming document mode according to all embodiments of the present disclosure. The document processing interface in the borderless canvas mode shown above FIG. 9A is used as an example. There are two shape objects in the document processing interface, which are respectively defined as the shape object 1 and the shape object 2. Because the shape object 1 is located above the shape object 2 in the current mode, based on this, it may be determined that when the streaming document mode is switched to, an order of content blocks in the shape object 1 needs to be prior to an order of content blocks in the shape object 2, as shown in the document processing interface in the streaming document mode shown below FIG. 9A.

It is assumed that there are two content blocks in the shape object 1, which are respectively a content block 1 and a content block 2 from top to bottom in the shape object 1, and there are two content blocks in the shape object 2, which are respectively a content block 3 and a content block 4 from top to bottom in the shape object 2. In this case, when the streaming document mode is switched to, a corresponding content field is [content block 1, content block 2, content block 3, content block 4]. In other words, the content block 1, the content block 2, the content block 3, and the content block 4 are rendered from top to bottom.

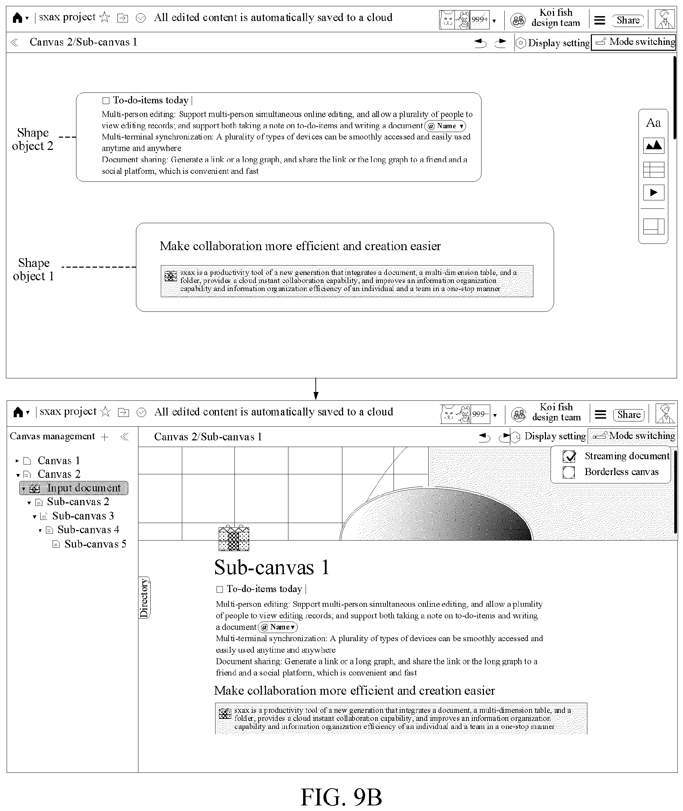

FIG. 9B is a schematic diagram of another document processing interface when a borderless canvas mode is switched to a streaming document mode according to all embodiments of the present disclosure. The document processing interface in the borderless canvas mode shown above FIG. 9B is used as an example. There are two shape objects in the document processing interface, which are respectively defined as the shape object 1 and the shape object 2. Because the shape object 2 is located above the shape object 1 in the current mode, based on this, it may be determined that when the streaming document mode is switched to, the order of the content blocks in the shape object 2 needs to be prior to the order of the content blocks in the shape object 1, as shown in the document processing interface in the streaming document mode shown below FIG. 9B.

It is assumed that there are two content blocks in the shape object 1, which are respectively the content block 1 and the content block 2 from top to bottom in the shape object 1, and there are two content blocks in the shape object 2, which are respectively the content block 3 and the content block 4 from top to bottom in the shape object 2. In this case, when the streaming document mode is switched to, a corresponding content field is [content block 3, content block 4, content block 1, content block 2]. In other words, the content block 3, the content block 4, the content block 1, and the content block 2 are rendered from top to bottom.

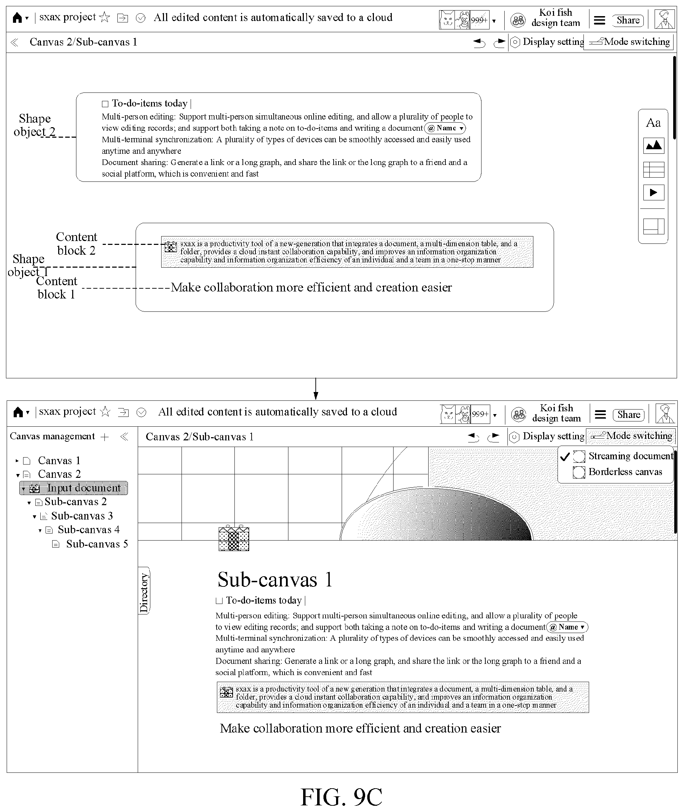

FIG. 9C is a schematic diagram of still another document processing interface when a borderless canvas mode is switched to a streaming document mode according to all embodiments of the present disclosure. FIG. 9C shows an example of switching the content block 1 "make collaboration more efficient and creation easier" and the content block 2 "sxax is a productivity tool of a new generation, ..., organization capability and efficiency" in the shape object 1 based on the borderless canvas mode shown above FIG. 9B. When the streaming document mode is switched to, a corresponding content field is [content block 3, content block 4, content block 2, content block 1]. In other words, the content block 3, the content block 4, the content block 2, and the content block 1 are rendered from top to bottom.

The shape objects may exist only in the borderless canvas mode, and in the streaming document mode, only the document content included in the content blocks is displayed.

In all embodiments of the present disclosure, in addition to dragging the shape objects, the content blocks, and the like, a user may also edit the document by adding the shape objects or the content blocks, to modify a corresponding data structure.

In all embodiments of the present disclosure, in the streaming document mode, a content block of each type may have a respective string and a respective content control.

For ease of description in all embodiments of the present disclosure, content blocks and respective strings listed below are merely simple examples.

Based on this, the user may further insert a new content block into the input document in any one of the following manners.

Manner 1: Insert, in response to an operation of inputting a target string in the input document, a content block corresponding to the target string at an input position of the target string.

An example in which the content block is classified into several categories including a basic block, an intelligent table, media and an attachment, an advanced chart, or an embedded page is used.

The basic block includes, but is not limited to, main text (/zw), a title 1 (/bt1), a title 2 (/bt2), a title 3 (/bt3), a code block (/dmk) (a content block configured to insert code), a highlighted block (/glk) (a highlighted content block), a project list (/xmlb), a to-do list (/dblb), a foldable list (/zdlb), a number list (/bhlb), citation text (/yslb), and a separation line (/fgx).

The intelligent table includes, but is not limited to, a table view (/bgst) and a dashboard view (/kbst).

The media and the attachment include, but are not limited to, a picture (/tp) and a local file (/wj).

The advanced chart includes, but is not limited to, a mind-guide graph (/swdt) and a flowchart (/lct).

The embedded page includes, but is not limited to, a third-party application or a mini-program such as an xx document (/xxwd), an xx video (/xxsp), xx music (/xxyy), or an xx note (/xxbj).

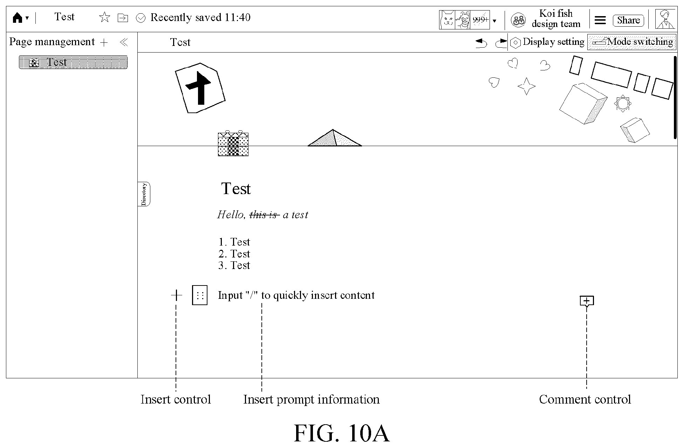

FIG. 10A shows an example of a document processing interface in a streaming document mode according to all embodiments of the present disclosure. Insertion prompt information is displayed, that is, "/" is inputted to quickly insert content, to prompt a user to quickly insert the content by entering "/". A user may enter an acronym of a to-be-inserted content block after entering "/". If a user wants to insert the highlighted block, the target string "/glk" may be entered.

The foregoing listed manner for defining strings through the acronyms is merely a simple example. In addition, other defining manners may be further used. This is not specifically limited herein.

In addition, a comment control is further displayed in FIG. 10A. A user may add a comment to the current content block through the comment control, or may @ another object, or the like.

Manner 2: Present at least one type of content control in response to an insertion operation triggered at a target position, and insert, in response to a selection operation on a target content control in the at least one type of content control, a content block corresponding to the target content control at the target position.

FIG. 10A further displays an insert control, such as "+" in FIG. 10A. The user may invoke various content controls based on the insert control, and insert the target content block in the following Manner 2.

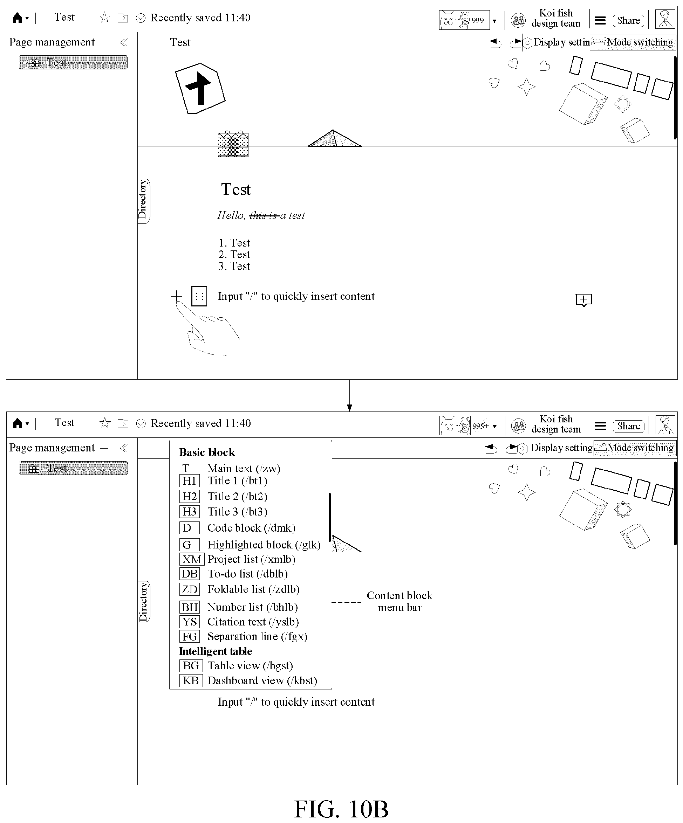

FIG. 10B is a schematic diagram of a content menu bar according to all embodiments of the present disclosure. If the user clicks the insert control "+", a menu bar (which is also referred to as the content menu bar) of the content block may be invoked, as shown in a lower interface in FIG. 10B.

Various content blocks such as the basic block and the intelligent table are displayed in the content menu bar shown in FIG. 10B. A content block of each type is further divided into a plurality of sub-types. For example, the basic block listed above includes, but is not limited to, the main text, the title, and the like.

For example, each row (except classification information such as the basic block and the intelligent table) in the content menu bar may be used as a type of content control. An icon of the content block and a corresponding string may be further displayed in the content control. For example, in "T main text (/zw)", "T" is the icon, and "/zw" is the string. Another content block is also displayed in the same format. Details are not described herein again.

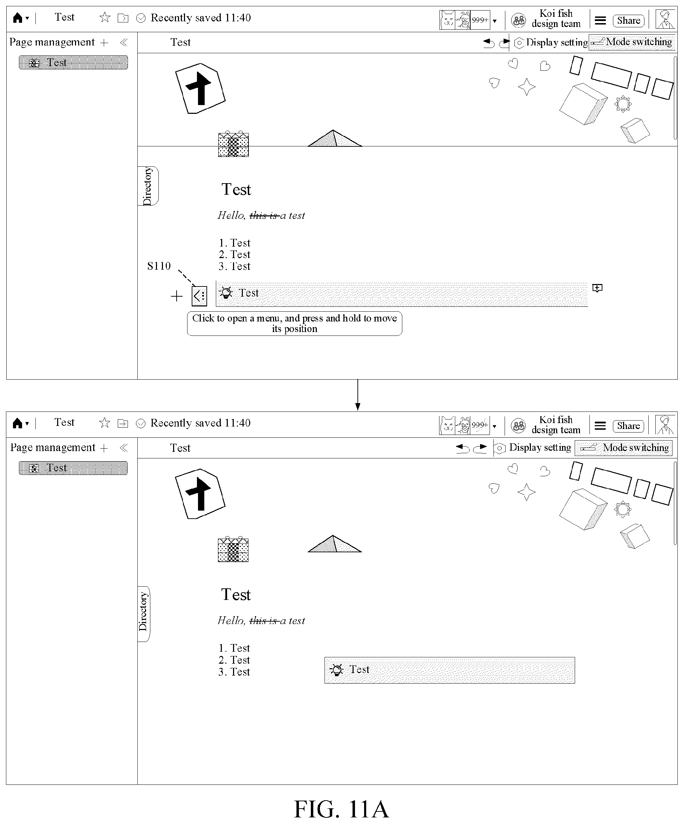

FIG. 11A is a schematic diagram of a highlighted block according to all embodiments of the present disclosure. An interface above FIG. 11A indicates that a highlighted block is inserted, and text "test" is inserted into the highlighted block. In addition, a user may open a content block menu bar by clicking an icon "+", and press and hold an icon S110 to move a position of the highlighted block, for example, move to a position shown below FIG. 11A.

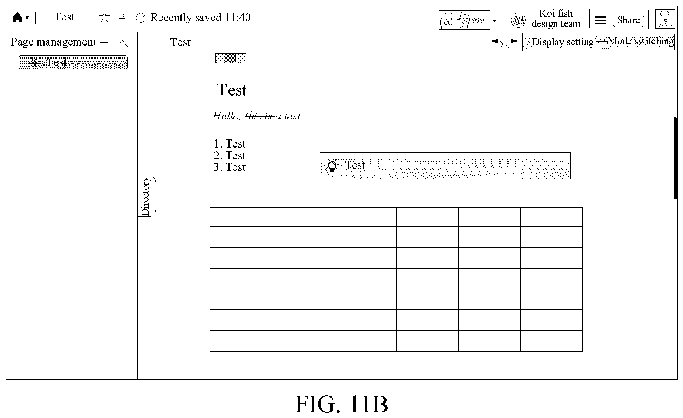

FIG. 11B is a schematic diagram of a table according to all embodiments of the present disclosure. For example, it indicates that a content block of a table type is further inserted based on the interface shown below FIG. 11A.

In all embodiments of the present disclosure, in the borderless canvas mode, a content block of each type corresponds to a corresponding content control. In the borderless canvas mode, the content block may be inserted based on the content control. A specific implementation is as follows.

First, a display setting bar may be presented in the document processing interface, and the display setting bar includes at least one type of content control.

Further, when a user selects a target content control, a client inserts, in response to a selection operation on the target content control in the at least one type of content control, a content block corresponding to the target content control at a specified position in the input document.

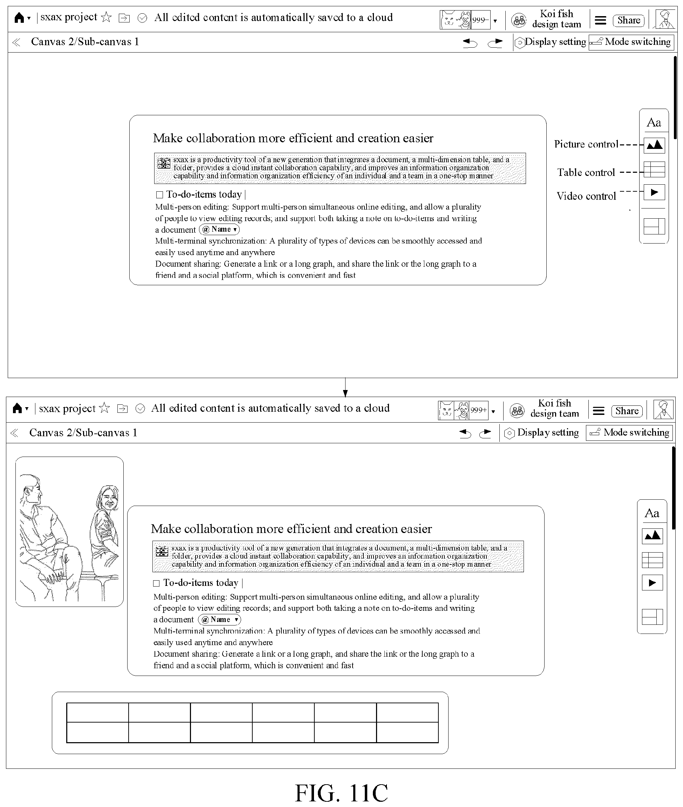

FIG. 11C is a schematic diagram of a display setting bar in a borderless canvas mode according to all embodiments of the present disclosure. In addition to a font control and a layout control, there are a plurality of types of content controls in the display setting bar, such as a picture control, a chart control, and a video control shown in FIG. 11C.

After clicking the picture control, the user may further select a to-be-inserted picture, which may be specifically a picture recommended by the client, select a picture from a local gallery, jump to a related web page for selection, or the like. After clicking the chart control, the user may select a to-be-inserted table, a to-be-inserted shape object, or the like. After clicking the video control, the user may select a to-be-inserted local video, a video in a third-party application/mini program, or the like.

An interface shown below FIG. 11C represents an example in which one picture and one table are inserted. A specific insertion position may be selected by the user. After insertion, a shape object may also be adaptively generated outside the content block.

The content blocks listed above are merely simple examples. The insertion position of the content block is the specified position in the input document, for example, a position of a cursor or a position of a touch point (or a position of a center of the document by default when the user does not perform selection). In addition, more content blocks of another type may be further set. This is not specifically limited herein.

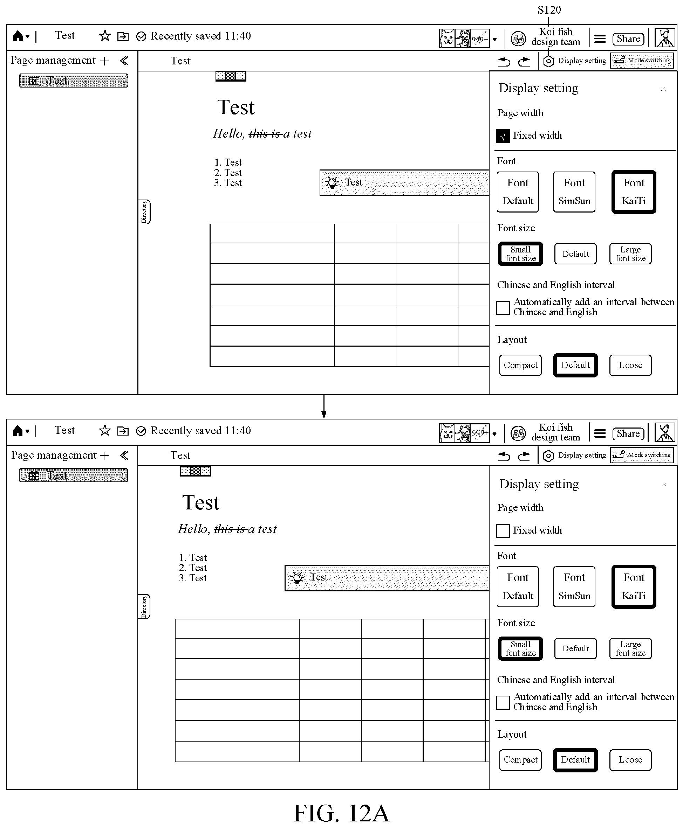

In all embodiments of the present disclosure, the document processing interface includes a display setting control, as shown in S120 in FIG. 12A. The user may view the display setting bar through the display setting control. In the present disclosure, the display setting bar includes at least one control configured to adjust a document content display style of an input document. In different page modes, presentation styles of the display setting bar may be different.

The presentation style may be specifically a size, a position, a color, and a form of the display setting bar, various display setting controls included in the display setting bar, and whether the display setting bar is in a form of a floating layer or a pop-up window.

In all embodiments of the present disclosure, the client presents the display setting bar in the document region in the document processing interface in response to a trigger operation on the display setting control; further adjusts display of the input document in response to a document adjustment operation triggered through the display setting bar; and finally hides the display setting bar in the document region in response to a close operation on the display setting bar.

FIG. 12A is a schematic diagram of a display setting bar in a streaming document mode according to all embodiments of the present disclosure. The display setting bar is presented on the right side of a document region in a document setting interface in a form of a floating layer.

The display setting bar includes several types of display setting controls such as a page width, a font, a font size, a Chinese and English interval, and a layout.

In a streaming document mode, two types of page width adjustment controls configured to adjust the page width may be set. One is a fixed width (such as a preset standard width), and the other is a full width. In addition, several fonts, font sizes, and the like may alternatively be set.

In all embodiments of the present disclosure, a client may adjust a page width of the input document in response to the document adjustment operation triggered through the page width adjustment control in the display setting bar, and adjust display positions of content blocks of the input document in the document region based on a change of the page width before and after the adjustment.

FIG. 12A shows an example of switching from a "fixed width" spacing to a "full width" spacing. In a switching process, the size of the document region does not change, but a distance between content inside the document region and a left boundary of the document region changes. When the fixed width is switched to the full width, the content inside the document region becomes closer to the left boundary.

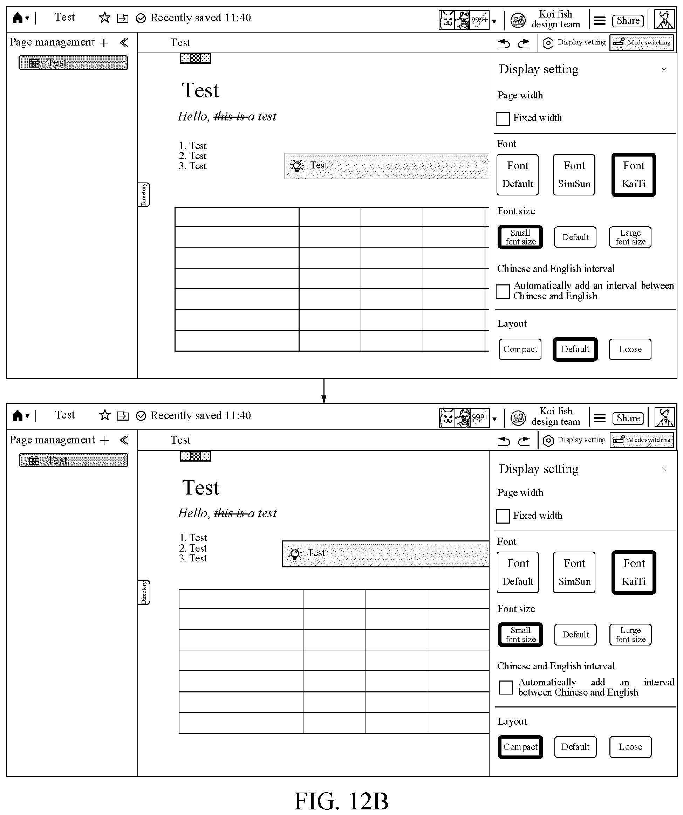

In all embodiments of the present disclosure, in the streaming document mode, the display setting bar includes a layout adjustment control configured to adjust a layout spacing. For example, a "layout" part in FIG. 12B corresponds to several layout spacing types: a compact spacing, a default spacing, and a loose spacing.

When a user adjusts display of the input document based on the layout adjustment control, an exemplary implementation is as follows:
presenting at least one layout spacing in response to a document adjustment operation triggered through the layout adjustment control in the display setting bar. Further, in response to a selection operation on a target layout spacing in the at least one layout spacing, spacings between the content blocks in the input document is correspondingly adjusted based on the target layout spacing.

FIG. 12B shows an example of switching from the "default" spacing to the "compact" spacing. After the user selects the "compact" spacing as the target layout spacing, spacings between the content blocks are reduced compared with the default spacing.

In contrast, when the "default" spacing is switched to the "loose" spacing, the spacings between the content blocks become larger than the default spacing. Changes in other switching cases are the same. Details are not described herein again.

In all embodiments of the present disclosure, in the borderless canvas mode, the display setting bar includes a layout control configured to recommend a layout template, and the adjusting display of the input document in response to a document adjustment operation triggered through the display setting bar includes:
presenting at least one layout template in response to a trigger operation on the layout control; presenting, in response to a selection operation on a target layout template in the at least one layout template, the target layout template in the document processing interface; and adjusting, based on the target layout template, display positions of the content blocks displayed in the document processing interface.

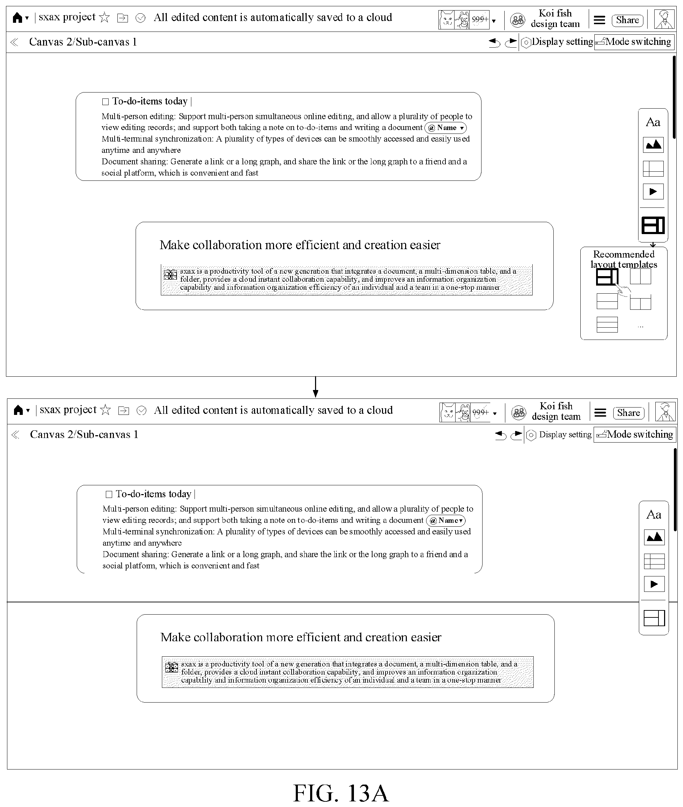

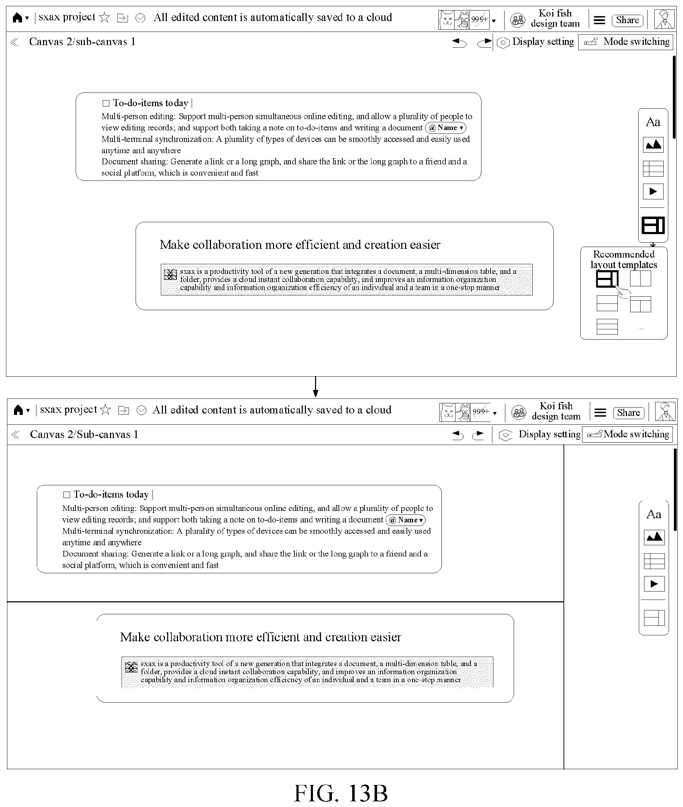

FIG. 13A shows a related example of a layout template according to all embodiments of the present disclosure. FIG. 13A shows an example of adjusting display positions of content blocks displayed in a document processing interface by selecting a template in the first column of the second row in recommended layout templates. FIG. 13B shows a related example of another layout template according to all embodiments of the present disclosure. FIG. 13B shows an example of adjusting display positions of content blocks displayed in a document processing interface by selecting a template in the first column of the first row in the recommended layout templates.

In summary, the display positions of the content blocks displayed in the document processing interface are adjusted based on a target layout template. Specifically, adaptive adjustment may be performed based on the style of the target layout template, content and a current position included in the displayed content blocks. As shown in FIG. 13A, the style of the target layout template is close to a layout of the currently displayed content blocks, and only positions of the displayed content blocks need to be slightly adjusted. However, in FIG. 13B, compared with FIG. 13A, there is a certain gap between the style of the target layout template and the layout of the currently displayed content blocks. Therefore, position adjustment on the displayed content blocks is also greater compared with that in FIG. 13A.

In the foregoing implementation, it may be convenient for a user to quickly select a more appropriate layout style through recommendation of a layout spacing, the layout template, or the like, to improve document processing efficiency.

In all embodiments of the present disclosure, when detecting an exit operation of the document processing interface, a client may further record a page mode of the document processing interface when the document processing interface is exited. Then, in response to a trigger operation on the document processing interface again, the client may display the document processing interface based on the page mode of the document processing interface when the document processing interface is exited.

For example, based on FIG. 5, the user closes the document processing interface, and the client records a case that the page mode is a streaming document mode when the document processing interface is exited in this case. When the user opens the document processing interface again (regardless of whether the user views a previous input document or another document), the client displays the document processing interface in the page mode when the document processing interface is exited last time. For example, the document processing interface is still displayed in the streaming document mode.

For another example, based on FIG. 7, the user closes the document processing interface, and the client records a case that the page mode is a borderless canvas mode when the document processing interface is exited in this case. When a user opens the document processing interface again (regardless of whether the user views a previous input document or another document), the client displays the document processing interface in the page mode when the document processing interface is exited last time. For example, the document processing interface is still displayed in the borderless canvas mode.

In addition, if an abnormality (such as a display abnormality) occurs in a switching processing of the page mode, the client may display a preset interface (for example, return to an upper-level interface of the document processing interface)

In the foregoing implementation, the foregoing process is implemented in a recording manner, to more accommodate to a use habit of the user, so that the user can quickly process the document.

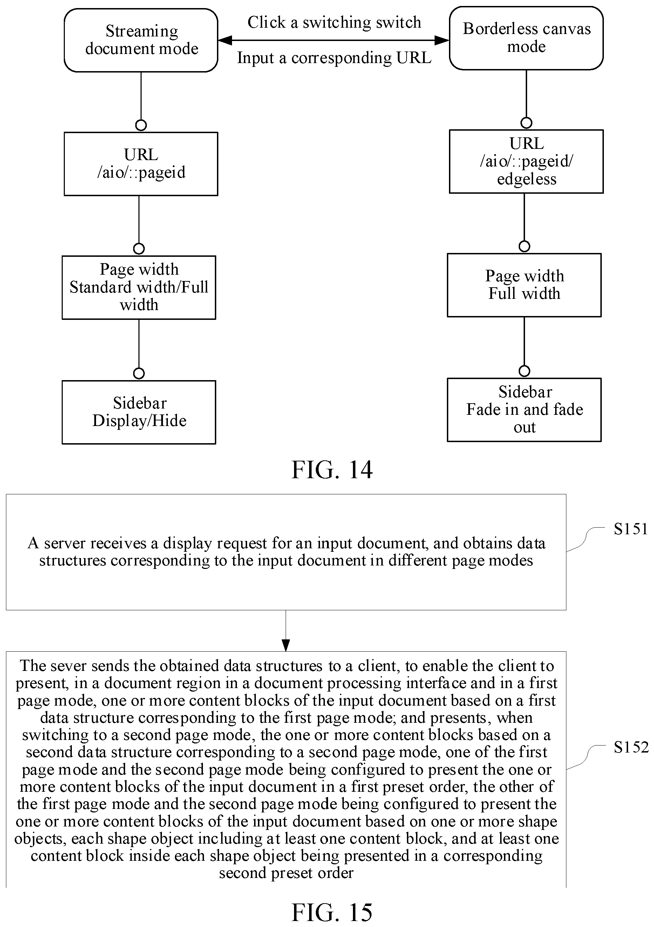

FIG. 14 is a schematic diagram of a page mode switching procedure and a user interface (UI) change according to all embodiments of the present disclosure.

A user may switch between a streaming document mode and a borderless canvas mode by clicking a switch or inputting a corresponding URL.

In the streaming document mode, the URI is, for example, "/aio/::pageid", a page width may be a marked width or a full width, and a sidebar may be displayed or hidden.

In the borderless canvas mode, the URI is, for example, "/aio/::pageid/edgeless", a page width is a full width, and a sidebar may fade in or fade out. The fading in or fading out herein is an effect of displaying and hiding the sidebar.

The sidebar is a toolbar such as a display setting bar in all embodiments of the present disclosure. In the present disclosure, an example in which the toolbar is displayed on the right side of a document region is used. Therefore, the toolbar may also be referred to as the sidebar. Certainly, that the toolbar is displayed at another position is also applicable to all embodiments of the present disclosure. Details are not described herein again.

Because a directory region may also be displayed in the streaming document mode, and only the document region is displayed in the borderless canvas mode without the directory region, the full width in the streaming document mode is different from the full width in the borderless canvas mode. For a specific difference, refer to FIG. 12A, FIG. 13A, FIG. 13B, or the like. Details are not described herein again.

In summary, in the present disclosure, in a related client, the user may switch the streaming document mode to the borderless canvas mode by clicking a button and/or accessing different page URLs. Content in a corresponding streaming canvas is seamlessly switched according to an adaptation rule, and can be completely displayed on a borderless canvas. In addition, the toolbar is switched to a form suitable for a borderless canvas scenario, to achieve conversion between different forms of the canvas. The user finally obtains high content processing efficiency in a content viewing scenario and a content editing scenario, and this helps the user resolve information processing problems encountered in the scenario.

FIG. 15 is a flowchart of implementing a document display control method according to all embodiments of the present disclosure. For example, a server is used as an execution body. A specific implementation procedure of the method is as follows.

Operation S151: The server receives a display request for an input document, and obtains data structures corresponding to the input document in different page modes.

In all embodiments of the present disclosure, page data is stored in different data structures for each document. As listed above, in a streaming document mode, a content field is used to store order information of content blocks in the input document, which is referred to as a first data structure. For another example, in a borderless canvas mode, layer information and coordinate information that are of each shape object on a canvas and that are in the input document are stored by using a shapes field, which is referred to as a second data structure.

Operation S152: The server sends the obtained data structures to a client, to enable the client to present, in a document region of a document processing interface and in a first page mode, one or more content blocks of the input document based on a first data structure corresponding to the first page mode; and presents, when switching to a second page mode, the one or more content blocks based on a second data structure corresponding to a second page mode.

The display size of a document region corresponding to the first page mode is different from a display size of a document region corresponding to the second page mode. For example, one is the streaming document mode configured to present the one or more content blocks of the input document in a first preset order, the other is the borderless canvas mode configured to present the one or more content blocks of the input document based on one or more shape objects, each of the one or more shape objects includes at least one content block, and the at least one content block inside each shape object is presented in a corresponding second preset order.

Identifiers corresponding to the same content block under different data structures are the same. Based on a unique identifier, a correspondence is established between two types of data corresponding to the same content block under different data structures, so that correct rendering of the content blocks during switching between the page modes can be ensured.

In all embodiments of the present disclosure, different page modes are views in which data layers are homologous and synchronized and rendering layers are independent of each other. Based on the foregoing manner, switching between the streaming document mode and the borderless canvas mode on the document processing interface can be supported without changing the data structure of the smart document. For a specific implementation, refer to the foregoing embodiments, and repeated parts are not described again.

In addition, in the streaming document mode or the borderless canvas mode, a user may adjust the content blocks in the input document. The client synchronously updates respective data structures in the two page modes based on the adjustment, and notifies the server. The server updates locally stored related data, so that when each user subsequently accesses the input document again, a page based on a latest data structure can be rendered for the user to view and edit.

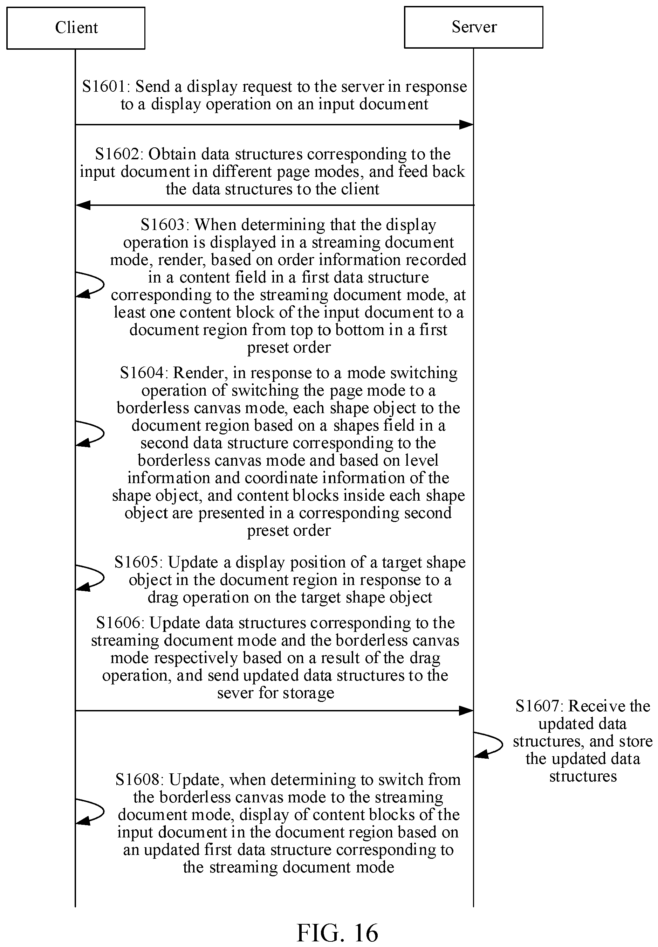

FIG. 16 is an interaction time sequence diagram of a document display control method according to all embodiments of the present disclosure. A specific implementation procedure of the method is as follows.

Operation S1601: A client sends a display request to a server in response to a display operation on an input document.

Operation S1602: The server obtains data structures corresponding to the input document in different page modes, and feeds back the data structures to the client.

Operation S1603: When determining that the display operation is displayed in a streaming document mode, the client renders, based on order information recorded in a content field in a first data structure corresponding to the streaming document mode, at least one content block of the input document to a document region from top to bottom in a first preset order.

Operation S1604: The client renders, in response to a mode switching operation of switching the page mode to a borderless canvas mode, each shape object to the document region based on a shapes field in a second data structure corresponding to the borderless canvas mode and based on layer information and coordinate information of the shape object, and content blocks inside each shape object are presented in a corresponding second preset order.

Operation S1605: The client updates a display position of a target shape object in the document region in response to a drag operation on the target shape object.

Operation S1606: The client updates data structures corresponding to the streaming document mode and the borderless canvas mode respectively based on a result of the drag operation, and sends updated data structures to the server.

Operation S 1607: The server receives the updated data structures, and stores the updated data structures.

Operation S 1608: The client updates, when determining to switch from the borderless canvas mode to the streaming document mode, display of content blocks of the input document in the document region based on an updated first data structure corresponding to the streaming document mode.

An interaction time sequence between the client and the server listed above is merely a simple example, and other related variations are similarly shown by examples. For example, the input document is first displayed in the borderless canvas mode, and then switched to the streaming document mode. This is not specifically limited herein.

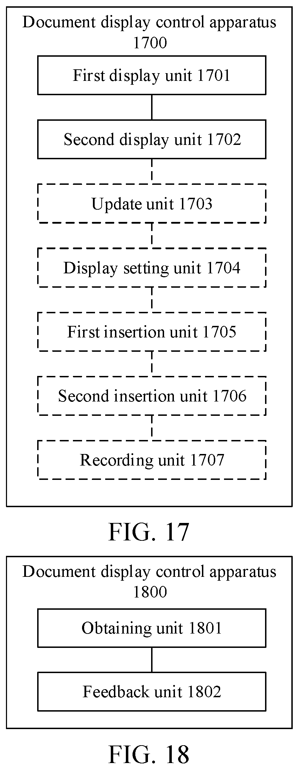

Based on the same inventive concept, all embodiments of the present disclosure further provide a document display control apparatus. FIG. 17 is a schematic structural diagram of a document display control apparatus 1700, and the apparatus may include:
a first display unit 1701, configured to display, in a document region of a document processing interface, one or more content blocks of an input document in a first preset order according to a first page mode, the first page mode referring to a first display size of the document region; and
a second display unit 1702, configured to, in response to a mode switching operation on the document processing interface, switch the document processing interface from the first page mode to a second page mode, and display the one or more content blocks of the input document inside one or more shape objects according to the second page mode, the second page mode referring to a second display size of the document region, and the second display size being different from the first display size.

Each of the one or more shape objects includes at least one content block, and the at least one content block in each shape object is presented in a corresponding second preset order.

In all embodiments of the present disclosure, the document processing interface may further include a directory region in the first page mode besides of the document region, the directory region is configured to display directory information of the input document, and in the second page mode, the document processing interface may include only the document region and does not include the directory region.

In various embodiments of the present disclosure, in the first page mode, a first data structure of the input document may include a first field representing document content, and the first field is of an array type, and is configured to store order information of the one or more content blocks in the input document. The first display unit 1701 is specifically configured to render the one or more content blocks of the input document to the document region from top to bottom in the first preset order corresponding to the order information stored in the first field.

In various embodiments of the present disclosure, in the first page mode, a first data structure of the input document may include a first field representing document content, and the first field is of an array type, and is configured to store order information of the one or more content blocks in the input document. The second display unit 1702 is specifically configured to render the one or more content blocks of the input document to the document region from top to bottom in the first preset order corresponding to the order information stored in the first field.

In various embodiments of the present disclosure, in the second page mode, a second data structure of the input document may include a second field representing shape object content, the second field is a key-value pair, and is configured to store layer information and coordinate information of each shape object in the input document, and the layer information is configured for representing order information of the at least one content block in each shape object. The first display unit 1701 is specifically configured to render each shape object to the document region based on the layer information and the coordinate information of each shape object in the second field, at least one content block inside each shape object being presented in the corresponding second preset order.

In various embodiments of the present disclosure, in the second page mode, the second data structure of the input document may include a second field representing shape object content, the second field is a key-value pair, and is configured to store layer information and coordinate information of each shape object in the input document, and the layer information is configured for representing order information of the content blocks in each shape object. The second display unit 1702 is specifically configured to render each shape object to the document region based on the layer information and the coordinate information of each shape object in the second field, at least one content block inside each shape object being presented in the corresponding second preset order.

In various embodiments of the present disclosure, the apparatus may further include:
an update unit 1703, configured to update display of corresponding content in the document region in response to a drag operation on the at least one content block or the shape object displayed in the second page mode, and update the first data structure in the first page mode and the second data structure in the second page mode based on a result of the drag operation; and
update, when the second page mode is switched to the first page mode, display of the one or more content blocks of the input document in the document region based on an updated first data structure in the first page mode.

In various embodiments of the present disclosure, the update unit 1703 may be specifically configured to:
update layer information and coordinate information of shape objects related to the drag operation in the second page mode based on the result of the drag operation; and
update, based on updated coordinate information of the related shape objects, order information of content blocks corresponding to the related shape objects in the first page mode, and update the order information of the content blocks in the related shape objects in the first page mode based on updated layer information of the related shape objects.

In various embodiments of the present disclosure, the layer information may be further configured for representing upper-lower-layer order information between the related shape objects when the related shape objects overlap with each other.

The update unit 1703 may be specifically configured to
update the order information of the content blocks corresponding to the related shape objects in the first page mode based on the updated coordinate information and the upper-lower-layer order information of the related shape objects.

In various embodiments of the present disclosure, the document processing interface may include a display setting control, and the apparatus further includes:
a display setting unit 1704, configured to present a display setting bar in the document region in the document processing interface in response to a trigger operation on the display setting control, the display setting bar including at least one control configured to adjust a document content display style of the input document, and presentation styles of the display setting bar being different in different page modes;
adjust display of the input document in response to a document adjustment operation triggered through the display setting bar; and
hide the display setting bar in the document region in response to a close operation on the display setting bar.

In various embodiments of the present disclosure, in the first page mode, the display setting bar may include a layout adjustment control configured to adjust a layout spacing, and the display setting unit 1704 is specifically configured to:
present at least one layout spacing in response to a document adjustment operation triggered through the layout adjustment control in the display setting bar; and
adjust, in response to a selection operation on a target layout spacing in the at least one layout spacing, spacings between the one or more content blocks of the input document based on the target layout spacing.

In various embodiments of the present disclosure, in the second page mode, the display setting bar may include a layout control configured to recommend a layout template, and the display setting unit 1704 is specifically configured to:
present at least one layout template in response to a trigger operation on the layout control; and
present, in response to a selection operation on a target layout template in the at least one layout template, the target layout template in the document processing interface, and adjust, based on the target layout template, a display position of the one or more content blocks displayed in the document processing interface.

In various embodiments of the present disclosure, in the first page mode, a content block of each type may correspond to a respective string and a respective content control, and the apparatus further includes:
a first insertion unit 1705, configured to insert, in response to an operation of inputting a target string in the input document, a content block corresponding to the target string at an input position of the target string; or
present at least one type of content control in response to an insertion operation triggered at a target position; and insert, in response to a selection operation on a target content control in the at least one type of content control, a content block corresponding to the target content control at the target position.

In various embodiments of the present disclosure, in the second page mode, a content block of each type may correspond to a corresponding content control, and the apparatus further includes:
a second insertion unit 1706, configured to present the display setting bar in the document processing interface, the display setting bar including the at least one type of content control; and
insert, in response to the selection operation on a target content control in the at least one type of content control, a content block corresponding to the target content control at a specified position in the input document.

In various embodiments of the present disclosure, the second display unit 1702 may be specifically configured to:
present, in response to a trigger operation on a switch control in a document processing interface, a mode menu bar associated with the switch control, the mode menu bar including at least the first page mode and the second page mode; and
switch the document processing interface from the first page mode to the second page mode in response to the mode switching operation triggered by selecting the second page mode.

In various embodiments of the present disclosure, different page modes may correspond to access links of different types.

The second display unit 1702 is specifically configured to:
switch the document processing interface from the first page mode to the second page mode in response to the mode switching operation triggered by inputting an access link of a type corresponding to the second page mode.

In various embodiments of the present disclosure, the apparatus may further include:
a recording unit 1707, configured to record, when detecting an exit operation of the document processing interface, a page mode of the document processing interface when the document processing interface is exited; and
display, in response to a trigger operation on the document processing interface, the document processing interface based on the page mode of the document processing interface when the document processing interface is exited.

Based on the same inventive concept, all embodiments of the present disclosure further provides another document display control apparatus. FIG. 18 is a schematic structural diagram of a document display control apparatus 1800, and the apparatus may include:
an obtaining unit 1801, configured to receive a display request for an input document, and obtain data structures corresponding to the input document in different page modes; and
a feedback unit 1802, configured to send obtained data structure to a client, to enable the client to present, in a document region in a document processing interface and in a first page mode, one or more content blocks of the input document based on a first data structure corresponding to the first page mode; and present, when switching to a second page mode, the one or more content blocks based on a second data structure corresponding to the second page mode, where display sizes of document regions corresponding to the first page mode and the second page mode are different, one is a streaming document mode configured to present one or more content blocks of the input document in a first preset order, the other is a borderless canvas mode configured to present the one or more content blocks of the input document based on one or more shape objects, each of the one or more shape objects includes at least one content block, and the at least one content block inside each shape object is presented in a corresponding second preset order.

In the present disclosure, a user may switch between the two page modes: the streaming document mode and the borderless canvas mode based on different scenario requirements, and content in a document is matched by using corresponding page mode transition logic. In different page modes, in addition to different display sizes of document regions, display styles of the content blocks included in the input document are also different. In the streaming document mode, the content blocks of the input document may be presented in a specific order. In the borderless canvas mode, the content blocks are displayed in the shape objects, the shape objects may be disordered in the document region, and the content blocks in each shape object are ordered. Different scenario requirements can be satisfied and a user with different requirements can be considered in the foregoing two different page modes, so that the smart document has a new breakthrough in an exploration direction of a document application form, to better serve a user editing scenario and improve processing efficiency of the smart document. Structured data constructed based on the content blocks may simultaneously support at least two page modes, so that the document content has a stronger expression capability and more dimensions. In addition, in the two page modes, the data layers are homologous and synchronized, and the rendering layers are independent of each other, that is, data and/or content in the content blocks may be simultaneously used in the two modes, and data structures configured for representing views in the two page modes are independent. When the user performs an operation on the input document in one page mode, update of the data layer in a background may be simultaneously used in the two page modes based on the operation of a user. In addition, a small amount of data of the rendering layer configured for rendering the view in the other page mode is updated, so that processing of the document data is more efficient. When the other page mode is switched to, because data of the data layer and the rendering layer is updated in real time based on the operation of the user, switching is faster, and rendering is more accurate. In addition, if page modes of the smart document are to be extended, the data structure of the rendering layer of the smart document may be modified, so that the data structure of the rendering layer has good extensibility.

For ease of description, the foregoing parts are divided into modules (or units) based on functions for respective description. Certainly, during implementation of the present disclosure, functions of the modules (or units) may be implemented in one or more pieces of software or hardware.

The terms "first" and "second" in the foregoing embodiments are merely for the purpose for clear description, and do not constitute a limitation on features.

After a document display control method and apparatus according to all embodiments of the present disclosure are described, an electronic device according to all embodiments of the present disclosure is described below.

A person skilled in the art can understand that various aspects of the present disclosure may be implemented as a system, a method, or a program product. Therefore, aspects of the present disclosure may be specifically implemented in the following forms: a completely hardware implementation, a completely software implementation (including firmware, microcode, and the like), or an implementation combining hardware and software aspects, which may be collectively referred to as a "circuit", a "module", or a "system" herein.

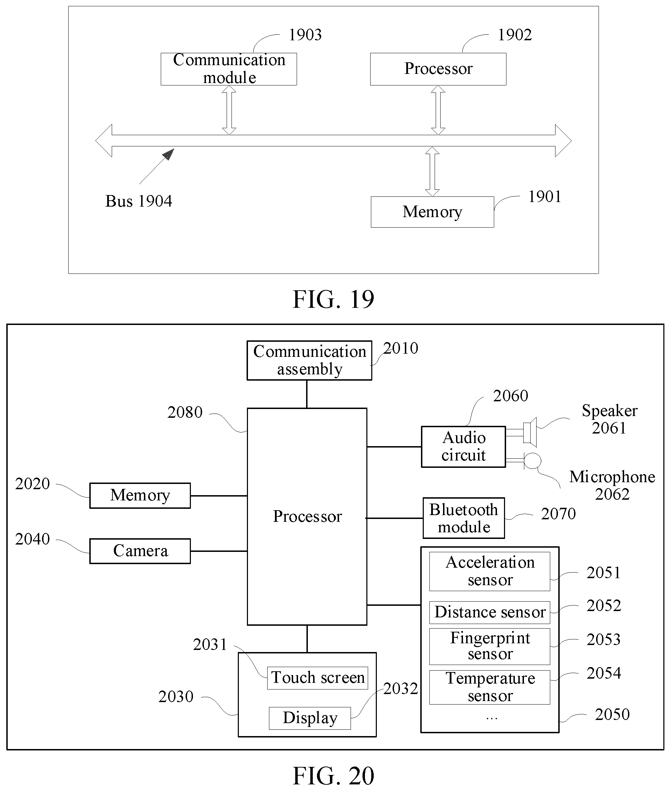

Based on a same inventive concept as the foregoing method embodiments, an electronic device is further provided in all embodiments of the present disclosure. In all embodiments, the electronic device may be a server, such as the server 120 shown in FIG. 1. In all embodiments, a structure of the electronic device may be shown in FIG. 19, including a memory 1901, a communication module 1903, and one or more processors 1902.

The memory 1901 is configured to store a computer program executed by the processor 1902. The memory 1901 may mainly include a program storage area and a data storage area. The program storage area may store an operating system, a program required for running an instant communication function, and the like. The data storage area may store various instant communication information, operation instruction sets, and the like.

The memory 1901 may be a volatile memory, such as a random-access memory (RAM). The memory 1901 may alternatively be a non-volatile memory, for example, a read-only memory, a flash memory, a hard disk drive (HDD), or a solid-state drive (SSD). Alternatively, the memory 1901 is any other medium that can carry or store a desired computer program in a form of instructions or a data structure and that can be accessed by a computer. However, this is not limited thereto. The memory 1901 may be a combination of the foregoing memories.

The processor 1902 may include one or more central processing units (CPUs), is a digital processing unit, or the like. The processor 1902 is configured to implement the foregoing document display control method when invoking the computer program stored in the memory 1901.

The communication module 1903 is configured to communicate with a terminal device and another server.

A specific connection medium between the memory 1901, the communication module 1903, and the processor 1902 is not limited in all embodiments of the present disclosure. In all embodiments of the present disclosure, in FIG. 19, the memory 1901 and the processor 1902 are connected through a bus 1904. The bus 1904 is described with a bold line in FIG. 19. A connection manner between other components is merely an example for description, and this is not intended to be a limitation. The bus 1904 may be divided into an address bus, a data bus, a control bus, and the like. For ease of description, only one bold line is used for description in FIG. 19, but only one bus or one type of the bus is not described.

The memory 1901 has a computer storage medium stored therein. The computer storage medium has computer-executable instructions stored therein. The computer-executable instructions are configured to implement the document display control method in all embodiments of the present disclosure. The processor 1902 is configured to perform the foregoing document display control method, as shown in FIG. 15.

In another embodiment, the electronic device may alternatively be another electronic device, such as the terminal device 110 shown in FIG. 1. In all embodiments, a structure of the electronic device may be shown in FIG. 20, including components such as a communication assembly 2010, a memory 2020, a display unit 2030, a camera 2040, a sensor 2050, an audio circuit 2060, a Bluetooth module 2070, and a processor 2080.

The display unit 2030 may be further configured to display information entered by a user or information provided for a user, and a Graphical user interface (GUI) of various menus of the terminal device 110. The display unit 2030 may include a display 2032 disposed on a front surface of the terminal device 110. The display 2032 may be configured in a form of a liquid crystal display, a light-emitting diode, or the like. The display unit 2030 may be configured to display a document processing interface in all embodiments of the present disclosure, and the like.

The display unit 2030 may be further configured to receive inputted digit or character information, and generate a signal input related to user setting and function control of the terminal device 110. The display unit 2030 may include a touch screen 2031 disposed on a front surface of the terminal device 110, and may collect a touch operation of the user on or near the touch screen, for example, clicking a button or dragging a scroll frame.

The touch screen 2031 may cover the display 2032, or the touch screen 2031 and the display 2032 may be integrated to implement an input function and an output function of the terminal device 110, which may be referred to as a touch display screen after integration. In the present disclosure, the display unit 2030 may display an application and a corresponding operation.

The terminal device may further include at least one sensor 2050, for example, an acceleration sensor 2051, a distance sensor 2052, a fingerprint sensor 2053, and a temperature sensor 2054. The terminal device may be further configured with other sensors for example, a gyroscope, a barometer, a hygrometer, a thermometer, an infrared sensor, an optical sensor, and a motion sensor.

The audio circuit 2060, a speaker 2061, and a microphone 2062 may provide an audio interface between the user and the terminal device 110. The audio circuit 2060 may convert received audio data into an electrical signal, and transmit the electrical signal to the speaker 2061. The speaker 2061 converts the electrical signal into a sound signal, and outputs the sound signal. The terminal device 110 may be further configured with a volume button, configured to adjust a volume of the sound signal. In addition, the microphone 2062 converts a collected sound signal into the electrical signal, the audio circuit 2060 receives the collected sound signal, converts the collected sound signal into audio data, and then outputs the audio data to the communication component 2010 to send the audio data to, for example, another terminal device 110, or outputs the audio data to the memory 2020 for further processing.

The Bluetooth module 2070 is configured to exchange, through a Bluetooth protocol, information with another Bluetooth device having the Bluetooth module. For example, the terminal device may establish, through the Bluetooth module 2070, a Bluetooth connection with a wearable electronic device (such as a smart watch) also having the Bluetooth module, to perform data exchange.

The processor 2080 is a control center of the terminal device, and is connected to various parts of the terminal by using various interfaces and lines. By running or executing the software program stored in the memory 2020 and invoking data stored in the memory 2020, the processor 2080 performs various functions of the terminal device and processes data. In some embodiments, the processor 2080 may include one or more processing units. The processor 2080 may further integrate an application processor and a baseband processor. The application processor mainly processes an operating system, a user interface, an application, and the like. The baseband processor mainly processes wireless communication. The foregoing baseband processor may alternatively not be integrated into the processor 2080. In the present disclosure, the processor 2080 may run the operating system, the application, user interface display, and touch response, and perform the document display control method in all embodiments of the present disclosure. In addition, the processor 2080 is coupled to the display unit 2030.

In some possible implementations, the aspects of the document display control method provided in the present disclosure may also be implemented in a form of a program product including a computer program. When the program product is run on the electronic device, the computer program is configured to cause the electronic device to perform the operations of the document display control method according to various embodiments of the present disclosure described above in this specification. For example, the electronic device may perform the operations shown in FIG. 2 or FIG. 15.

The program product may use any combination of one or more readable media. The readable medium may be a readable signal medium or a readable storage medium. The readable storage medium may be, for example, but not limited to, an electrical, magnetic, optical, electromagnetic, infrared, or a semiconductor system, apparatus, or device, or any combination thereof. More specific examples (a non-exhaustive list) of the readable storage medium include an electrical connection having one or more wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any appropriate combination thereof.

The program product in the embodiments of the present disclosure may use a portable compact disc read-only memory (CD-ROM), include the computer program, and may be run on the electronic device. However, the program product of the present disclosure is not limited thereto. In this specification, the readable storage medium may be any tangible medium that includes or stores the program. The program may be used by or in combination with a command execution system, apparatus, or device.

The readable signal medium may include a data signal propagated in a baseband or as a part of a carrier, and carries the readable computer program. The propagated data signal may use various forms, including but not limited to an electromagnetic signal, an optical signal, or any appropriate combination of thereof. The readable signal medium may alternatively be any readable medium other than the readable storage medium. The readable medium may send, propagate, or transmit a program used by or in combination with a command execution system, apparatus, or device.

The computer program included in the readable medium may be transmitted by using any suitable medium, including but not limited to a wireless medium, a wired medium, an optical cable, an RF, or the like, or any suitable combination thereof.

The computer program configured to perform the operations of the present disclosure may be written in any combination of one or more programming languages. The programming languages include object-oriented programming languages such as Java and C++, and further include conventional procedural programming languages such as a "C" language or similar programming languages. The computer program may be executed entirely on the user electronic device, may be executed partially on the user electronic device, may be executed as an independent software package, may be executed partially on the user electronic device and partially on a remote electronic device, or may be executed entirely on the remote electronic device or the server. In a case involving the remote electronic device, the remote electronic device may be connected to the user electronic device through any type of network including a local area network (LAN) or a wide area network (WAN), or may be connected to an external electronic device (for example, which may be connected through the internet by using an internet service provider).

Although several units or subunits of the apparatus are mentioned in the foregoing detailed descriptions, such division is merely exemplary and not mandatory. Actually, based on the implementations of the present disclosure, the features and functions of the two or more units described above may be specified in one unit. On the contrary, the features and functions of one unit described above may be further divided into a plurality of units to be specified.

In addition, although operations of the method in the present disclosure are described in a specific order in the accompanying drawings, this does not require or imply that the operations need to be performed in the specific order, or that all the operations shown need to be performed, to achieve an expected result. Additionally or alternatively, some operations may be omitted, a plurality of operations may be combined into one operation for execution, and/or one operation may be decomposed into a plurality of operations for execution.

A person skilled in the art needs to understand that all embodiments of the present disclosure may be provided as a method, a system, or a computer program product. Therefore, the present disclosure may use a form of the entirely hardware embodiments, the entirely software embodiments, or all embodiments combining software and hardware aspects. In addition, the present disclosure may be in a form of a computer program product implemented on one or more computer-usable storage media (including but not limited to a magnetic disk memory, a CD-ROM, an optical memory, and the like) including computer-usable computer programs.

The present disclosure is described with reference to flowcharts and/or block diagrams of the method, the device (system), and the computer program product according to all embodiments of the present disclosure. A computer program command may be used to implement each procedure and/or each block in the flowcharts and/or the block diagrams and a combination of a procedure and/or a block in the flowcharts and/or the block diagrams. These computer program commands may be provided for a general-purpose computer, a dedicated computer, an embedded processor, or a processor of another programmable data processing device to generate a machine, so that the commands executed by the computer or the processor of another programmable data processing device generate an apparatus for implementing a specific function in one or more processes in the flowcharts and/or in one or more blocks in the block diagrams.

These computer program commands may also be stored in a computer-readable memory that can guide a computer or another programmable data processing device to operate in a specific manner, so that the commands stored in the computer-readable memory generate an artifact that includes a command apparatus, and the command apparatus implements a specific function in one or more procedures in the flowcharts and/or in one or more blocks in the block diagrams.

These computer program commands may also be loaded onto a computer or another programmable data processing device, so that a series of operations and operations are performed on the computer or another programmable device, thereby generating computer-implemented processing. Therefore, the commands executed on the computer or the another programmable device provide operations for implementing a specific function in one or more procedures in the flowcharts and/or in one or more blocks in the block diagrams.

## Claims

1. A document display control method, **characterized by** comprising:
displaying, in a document region of a document processing interface, one or more content blocks of an input document in a first preset order according to a first page mode; and
in response to a mode switching operation on the document processing interface, switching the document processing interface from the first page mode to a second page mode, and displaying the one or more content blocks of the input document inside one or more shape objects according to the second page mode, each of the one or more shape objects comprising at least one content block, and the at least one content block in each shape object being presented in a corresponding second preset order.

2. The method according to claim 1, **characterized by** comprising:
displaying the document region and a directory region of the document processing interface according to the first page mode, the directory region being configured to display directory information of the input document; and
displaying the document region and not displaying the directory region of the document processing interface according to the second page mode.

3. The method according to claim 1 or 2, **characterized in that** displaying the one or more content blocks of the input document in the first preset order according to the first page mode comprises:
rendering the one or more content blocks of the input document to the document region from top to bottom in the first preset order corresponding to order information stored in a first field comprised in a first data structure of the input document in the first page mode, the first field representing content of the input document, the order information indicating an order of the one or more content blocks in the input document, and the first field being of an array type .

4. The method according to any one of claims 1 to 3, **characterized in that** displaying the one or more content blocks of the input document in the second preset order according to the second page mode comprises:
rendering each shape object to the document region based on layer information and coordinate information of each shape object in the input document in a second field comprised in a second data structure of the input document in the second page mode, the second field being a key-value pair, the layer information representing order information of the at least one content block in each shape object, the at least one content block inside each shape object being presented in the corresponding second preset order.

5. The method according to claim 4, **characterized in that** the method further comprises:
updating display of corresponding content in the document region in response to a drag operation on the at least one content block or the shape object displayed in the second page mode, and updating the first data structure in the first page mode and the second data structure in the second page mode based on a result of the drag operation; and
updating, when the second page mode is switched to the first page mode, display of the one or more content blocks of the input document in the document region based on an updated first data structure in the first page mode.

6. The method according to claim 5, **characterized in that** the updating the first data structure in the first page mode and the second data structure in the second page mode based on a result of the drag operation comprises:
updating layer information and coordinate information of shape objects related to the drag operation in the second page mode based on the result of the drag operation; and
updating, based on updated coordinate information of the related shape objects, order information of content blocks corresponding to the related shape objects in the first page mode, and updating the order information of the content blocks in the related shape objects in the first page mode based on updated layer information of the related shape objects.

7. The method according to claim 6, **characterized in that** the updating, based on updated coordinate information of the related shape objects, order information of content blocks corresponding to the related shape objects in the first page mode comprises:
when the related shape objects overlap with each other, updating the order information of the content blocks corresponding to the related shape objects in the first page mode based on the updated coordinate information of the related graphics and upper-lower-layer order information of the related shape objects represented by the layer information.

8. The method according to any one of claims 1 to 7, **characterized in that** the method further comprises:
presenting a display setting bar in the document region in the document processing interface in response to a trigger operation on a display setting control comprised in the document processing interface, the display setting bar comprising at least one control configured to adjust a document content display style of the input document, and presentation styles of the display setting bar being different in different page modes;
adjusting display of the input document in response to a document adjustment operation triggered through the display setting bar; and
hiding the display setting bar in the document region in response to a close operation on the display setting bar.

9. The method according to claim 8, **characterized in that** in the first page mode, the adjusting display of the input document in response to a document adjustment operation triggered through the display setting bar comprises:
presenting at least one layout spacing in response to a document adjustment operation triggered through a layout adjustment control in the display setting bar, the layout adjustment control being configured to adjust a layout spacing; and
adjusting, in response to a selection operation on a target layout spacing in the at least one layout spacing, spacings between the one or more content blocks of the input document based on the target layout spacing.

10. The method according to claim 8 or 9, **characterized in that** in the second page mode, the adjusting display of the input document in response to a document adjustment operation triggered through the display setting bar comprises:
presenting at least one layout template in response to a trigger operation on a layout control comprised in the display setting bar, the layout control being configured to recommend layout templates; and
presenting, in response to a selection operation on a target layout template in the at least one layout template, the target layout template in the document processing interface, and adjusting, based on the target layout template, a display position of the one or more content blocks displayed in the document processing interface.

11. The method according to any one of claims 1 to 10, **characterized in that** in the first page mode, a content block of each type corresponds to a respective string and a respective content control, and the method further comprises:
inserting, in response to an operation of inputting a target string in the input document, a content block corresponding to the target string at an input position of the target string; or
presenting at least one type of content control in response to an insertion operation triggered at a target position, and inserting, in response to a selection operation on a target content control in the at least one type of content control, a content block corresponding to the target content control at the target position.

12. The method according to any one of claims 1 to 11, **characterized in that** in the second page mode, a content block of each type corresponds to a corresponding content control, and the method further comprises:
presenting the display setting bar in the document processing interface, the display setting bar comprising the at least one type of content control; and
inserting, in response to the selection operation on the target content control in the at least one type of content control, a content block corresponding to the target content control at a specified position in the input document.

13. The method according to any one of claims 1 to 12, **characterized in that** the switching the document processing interface from the first page mode to a second page mode in response to a mode switching operation on the document processing interface comprises:
presenting, in response to a trigger operation on a switch control in the document processing interface, a mode menu bar associated with the switch control, the mode menu bar comprising at least the first page mode and the second page mode; and
switching the document processing interface from the first page mode to the second page mode in response to the mode switching operation triggered by selecting the second page mode.

14. The method according to any one of claims 1 to 13, **characterized in that** different page modes correspond to access links of different types; and
the switching the document processing interface from the first page mode to a second page mode in response to a mode switching operation on the document processing interface comprises:
switching the document processing interface from the first page mode to the second page mode in response to the mode switching operation triggered by inputting an access link of a type corresponding to the second page mode.

15. The method according to any one of claims 1 to 14, **characterized in that** the method further comprises:
recording, when detecting an exit operation of the document processing interface, a page mode of the document processing interface when the document processing interface is exited; and
displaying, in response to a trigger operation on the document processing interface, the document processing interface based on the page mode of the document processing interface when the document processing interface is exited.

16. The method according to claim 1, **characterized in that** the method further comprises:
receiving a display request for the input document, and obtaining data structures corresponding to the input document in different page modes; and
transmitting the obtained data structures to a client, to enable the client to present, in the first page mode and in the document region in the document processing interface, the one or more content blocks of the input document based on a first data structure corresponding to the first page mode, and present, when switching to the second page mode, the one or more content blocks based on a second data structure corresponding to the second page mode.

17. A document display control apparatus, **characterized by** comprising:
a first display unit, configured to display, in a document region of a document processing interface, one or more content blocks of an input document in a first preset order according to a first page mode; and
a second display unit, configured to, in response to a mode switching operation on the document processing interface, switch the document processing interface from the first page mode to a second page mode, and display the one or more content blocks of the input document inside one or more shape objects according to the second page mode, each of the one or more shape objects comprising at least one content block, and the at least one content block in each shape object being presented in a corresponding second preset order.

18. An electronic device, **characterized by** comprising a processor and a memory, the memory having a computer program stored therein, and the computer program, when executed by the processor, causes the processor to perform the operations of the method according to any one of claims 1 to 16.

19. A computer-readable storage medium, **characterized by** comprising a computer program, when the computer program is run on an electronic device, the computer program being configured to cause the electronic device to perform the operations of the method according to any one of claims 1 to 16.

20. A computer program product, **characterized by** comprising a computer program, the computer program being stored in a computer-readable storage medium, and when a processor of an electronic device reads the computer program from the computer-readable storage medium, the processor executing the computer program, to cause the electronic device to perform the operations of the method according to any one of claims 1 to 16.
